Europäisches Patentamt

European Patent Office

Office européen des brevets

(19)

(11) **EP 1 141 426 B1**

(12) **FASCICULE DE BREVET EUROPEEN**

| | |
|---|---|
| (45) Date de publication et mention de la délivrance du brevet:<br>**12.05.2004 Bulletin 2004/20** | (51) Int Cl.⁷: **C22B 21/06** |
| (21) Numéro de dépôt: **00900526.5** | (86) Numéro de dépôt international:<br>**PCT/FR2000/000010** |
| (22) Date de dépôt: **05.01.2000** | (87) Numéro de publication internationale:<br>**WO 2000/040768 (13.07.2000 Gazette 2000/28)** |

(54) **PROCEDE ET DISPOSITIF DE PURIFICATION DE L'ALUMINIUM PAR SEGREGATION**

VERFAHREN UND VORRICHTUNG ZUR REINIGUNG VON ALUMINIUM DURCH ENTMISCHUNG

METHOD AND DEVICE FOR PURIFYING ALUMINIUM BY SEGREGATION

| | |
|---|---|
| (84) Etats contractants désignés:<br>**DE ES FR GB NL**<br>Etats d'extension désignés:<br>**RO** | (72) Inventeur: **LEROY, Michel**<br>**38120 Saint Egrève (FR)** |
| (30) Priorité: **08.01.1999 FR 9900247** | (74) Mandataire: **Marsolais, Richard**<br>**Péchiney,**<br>**Immeuble "SIS"**<br>**217, cours Lafayette**<br>**69451 Lyon Cedex 06 (FR)** |
| (43) Date de publication de la demande:<br>**10.10.2001 Bulletin 2001/41** | |
| (60) Demande divisionnaire:<br>**03024688.8** | (56) Documents cités:<br>**US-A- 4 221 590**     **US-A- 4 456 480**<br>**US-A- 4 734 127** |
| (73) Titulaire: **ALUMINIUM PECHINEY**<br>**75218 Paris Cedex 16 (FR)** | • **PATENT ABSTRACTS OF JAPAN vol. 017, no. 492 (C-1107), 7 septembre 1993 (1993-09-07) & JP 05 125463 A (SUMITOMO CHEM CO LTD), 21 mai 1993 (1993-05-21)** |

## Description

### Domaine de l'invention

L'invention concerne la purification de l'aluminium par ségrégation. Elle concerne tout particulièrement les procédés et dispositifs de purification par ségrégation qui permettent d'obtenir de l'aluminium de très haute pureté, à savoir de pureté supérieure à 3N5, c'est-à-dire contenant plus de 99,95 % d'aluminium.

### Etat de la technique

Les procédés de purification de l'aluminium par ségrégation visent à obtenir un aluminium ayant une faible teneur en éléments eutectiques, tels que le cuivre, le fer, le silicium, le magnésium, la gallium ou le zinc. Ces procédés reposent sur le fait que la solidification partielle d'une masse d'aluminium liquide impur (dite liqueur mère) tend à concentrer les éléments eutectiques dans la masse liquide et à produire des cristaux ayant une teneur en éléments eutectiques nettement inférieure à celle de la liqueur mère. Ainsi, le principe de base des procédés de ségrégation connus consiste à favoriser la cristallisation partielle d'une masse d'aluminium liquide impur et à séparer physiquement les deux phases de manière à isoler le métal purifié de la liqueur mère résiduelle, enrichie en éléments eutectiques.

Plusieurs procédés ont été développés autour de ce principe de base. Typiquement, après avoir placé une charge d'aluminium liquide impur dans un récipient réfractaire isolé thermiquement, on induit la formation de cristaux fins dans la partie supérieure de l'aluminium liquide par un refroidissement local de celui-ci, on entraîne ensuite l'accumulation progressive des cristaux dans la partie inférieure du récipient, sous l'effet de la gravité, on arrête le processus de purification lorsqu'une fraction donnée de la liqueur mère a été cristallisée, et on sépare les cristaux purifiés de la liqueur mère résiduelle.

Selon le brevet américain US 3 211 547, les cristaux sont formés à la surface de la masse d'aluminium liquide par un refroidissement contrôlé de celle-ci, se détachent et s'accumulent ensuite au fond du récipient sous l'action de la gravité. Un damage (ou tassage) partiel de la masse de cristaux est effectué à intervalles réguliers tout au long de la phase de cristallisation. L'utilisation d'un tassage, en cours de cristallisation, de la masse de cristaux accumulés au fond du récipient, permet d'améliorer sensiblement le taux de purification du procédé. A la fin de la phase de cristallisation, on évacue tout d'abord la liqueur mère résiduelle par écoulement en phase liquide, de préférence par un orifice situé au niveau de la surface supérieure de la masse de cristaux d'aluminium purifié accumulée au fond du récipient, et on récupère ensuite ladite masse de cristaux accumulée en la fondant et en la laissant s'écouler en phase liquide par un orifice situé près du fond du récipient.

Selon le brevet français FR 1 594 154 (correspondant au brevet américain US 3 671 229), les cristaux se forment sur la surface externe d'un tube borgne en graphite, au droit de la partie immergée dans la liqueur mère. Un gaz de refroidissement circule dans ledit tube de manière à déclencher la cristallisation. Un anneau en graphite, maintenu dans l'aluminium liquide, racle périodiquement la surface extérieure du tube, détachant ainsi les cristaux qui s'y sont formés. Les cristaux s'accumulent au fond du creuset sous l'effet de la gravité et la masse de cristaux accumulée est régulièrement tassée à l'aide dudit anneau. Le tube est progressivement remonté au fur et à mesure que la solidification progresse. A la fin de la phase de cristallisation, on sépare ensuite la masse solide purifiée (appelée "bloom") de la masse liquide résiduelle, enrichie en éléments eutectiques, par exemple en siphonnant la liqueur mère résiduelle ou en basculant le creuset. Selon le brevet français FR 2 592 663 (correspondant au brevet américain US 4 744 823), il est possible d'augmenter davantage le coefficient de purification de ce procédé en basculant le récipient pour permettre l'écoulement de la liqueur mère résiduelle et en le maintenant dans la position basculée de manière à permettre l'élimination du liquide interstitiel résiduel par égouttage.

Selon le brevet français FR 2 524 489 (correspondant au brevet américain US 4 456 480) et le brevet américain US 4 221 590, on induit une refusion des cristaux accumulés au fond du creuset durant la phase de cristallisation et de tassage des cristaux, ce qui conduit à une purification supplémentaire du métal et permet d'atteindre des coefficients de purification supérieurs aux valeurs théoriques.

Selon le brevet japonais JP 58-167733, les cristaux d'aluminium purifié se forment en périphérie de la surface interne du creuset, dans une zone déterminée située en dessous de la surface libre de l'aluminium liquide, à l'aide d'un dispositif de refroidissement comprenant une canalisation en acier inoxydable dans laquelle circule de l'air frais. La partie de l'aluminium liquide située au-dessus de la zone de refroidissement est chauffée de manière à éviter sa solidification. Les cristaux formés dans la zone de refroidissement forcé sont détachés à l'aide d'un piston en graphite, de section sensiblement égale à celle du creuset et immergé en permanence dans l'aluminium liquide, qui racle périodiquement la surface du creuset et favorise leur accumulation au fond du creuset. Le piston est également utilisé pour tasser les cristaux accumulés au fond du creuset. Des passages aménagés dans le piston permettent l'écoulement des cristaux vers le fond du creuset et l'écoulement du métal liquide lors des mouvements du piston. La masse de métal solidifié est partiellement refondue à l'aide de moyens de chauffage. Lorsque la masse de cristaux accumulés a atteint la zone de refroidissement, le piston est retiré, la liqueur mère est évacuée par siphonnage et la masse solide est extraite du creuset, puis découpée en fonction de la pureté souhaitée.

**Problème posé**

Les blooms produits industriellement selon l'état de la technique présentent des hétérogénéités de pureté. En particulier, on observe un gradient de pureté entre le haut et le bas des blooms. Il est connu de scier la partie supérieure du bloom final, plus chargé en impuretés que la partie inférieure, et de ne garder que cette dernière pour les applications exigeant les niveaux de pureté les plus élevés. Typiquement, l'opération de sciage élimine 15 % à 30 % du bloom final. Cette solution a toutefois pour inconvénient d'éliminer une partie importante des blooms obtenus, ce qui réduit par conséquent la productivité effective d'une usine et génère des rebuts qui compliquent la gestion des stocks de métal.

La demanderesse a par ailleurs constaté que les blooms obtenus industriellement présentent généralement des variations de pureté entre le coeur et la périphérie, le métal en périphérie étant plus pur que le métal au coeur du bloom. D'une façon générale, la productivité plus grande des gros creusets varie en sens contraire de la pureté du produit obtenu. Par exemple, les coefficients de purification K effectifs (sur l'intégralité de chaque bloom) observés pour le fer (KFe) et pour le silicium (KSi), sur des creusets de diamètre 800 mm, étaient inférieurs d'environ 50 % à ceux observés (à vitesse de montée identique) à ceux des creusets de diamètre 600 mm. Avec ce type d'hétérogénéité, de caractère essentiellement radial, le métal de grande pureté peut difficilement être prélevé par une simple opération de sciage.

Outre ces hétérogénéités, la demanderesse a observé des variations significatives, d'une opération à l'autre, dans le temps nécessaire pour obtenir un bloom de masse prédéterminée. Ces variations, imputables à différentes causes (telles que l'usure des matériels et les variations de conductivité thermique), affectent la productivité effective d'un site industriel et compliquent l'organisation du travail et les procédures internes.

Enfin, la demanderesse a constaté que la productivité et le taux de purification effectif moyen varient inversement l'un de l'autre. Ainsi, lorsqu'on augmente la productivité, on observe une diminution du taux de purification, et, inversement, lorsqu'on augmente le taux de purification, on observe une diminution de la productivité. Cette contrainte limite la marge de manoeuvre de la production industrielle de manière significative et grève également les coûts de production.

La demanderesse a donc recherché des solutions qui permettent de repousser les limites du compromis entre taux de purification et productivité, et de réduire les hétérogénéités et les variations de pureté dans les blooms obtenus industriellement, tout en visant des dispositifs et des procédés simples, de manière à réduire globalement les coûts d'investissement, de production et d'entretien.

**Objet de l'invention**

L'invention a pour premier objet un procédé de purification de l'aluminium par ségrégation visant à la formation, d'une masse solide (ou "bloom") de très haute pureté (à savoir supérieure à 3N5, c'est-à-dire contenant plus de 99,95 % d'aluminium), à partir d'une masse d'aluminium liquide impure appelée "liqueur mère", comprenant la formation de cristaux par cristallisation partielle, un tassage périodique du bloom et une refusion essentiellement continue du bloom par chauffage en cours de croissance, et caractérisé en ce qu'il comprend une mesure périodique de la hauteur H du bloom en cours de croissance et l'ajustement de la puissance de chauffage en fonction de la hauteur H mesurée.

L'invention a aussi pour objet un dispositif de purification de l'aluminium, apte à former une masse d'aluminium solide (ou "bloom") de très haute pureté par ségrégation, comprenant un creuset réfractaire, un four muni de moyens de chauffage du creuset, des moyens pour produire une refusion dudit bloom par chauffage en cours de croissance, et au moins un moyen de tassage, et caractérisé en ce qu'il comprend des moyens pour mesurer la hauteur H de ladite masse solide en cours de croissance, pour comparer la hauteur H mesurée à une hauteur de consigne Ho prédéterminée et variable dans le temps et pour piloter la puissance de chauffe desdits moyens de chauffage en fonction de la différence entre ladite hauteur H mesurée et la hauteur de consigne Ho de manière à obtenir une vitesse de progression de la hauteur qui est décroissante dans le temps.

La demanderesse a constaté que, de façon inattendue, les hétérogénéités de pureté du bloom final et les variabilité d'un bloom à l'autre étaient en fait liées à la puissance de chauffe injectée au cours du processus de ségrégation et que la pratique antérieure, qui consistait à injecter une puissance de chauffe sensiblement constante, sans ajustement rétroactif, au cours de la croissance du bloom, conduisait à des hétérogénéités et des variations de la pureté nettement plus importantes que celles observées avec une variation progressive de la puissance de chauffe selon l'invention. Elle a également observé qu'un pilotage de la puissance de chauffe durant la croissance du bloom permettait non seulement de réduire les hétérogénéités et les variations de pureté, mais aussi de repousser les limites du compromis entre taux de purification et productivité.

## Description des figures

La figure 1 illustre de manière schématique un cycle élémentaire de purification selon un mode de réalisation préféré du procédé selon l'invention.

La figure 2 illustre un dispositif de purification par ségrégation selon un mode de réalisation préféré de l'invention.

La figure 3 montre les zones de cristallisation et de refusion du creuset lorsque le moyen de tassage est en position basse, dite de cristallisation.

La figure 4 montre des modes réalisation préférés de l'embout du moyen de tassage du dispositif selon l'invention.

La figure 5 montre des courbes de croissance de la masse solide, c'est-à-dire des courbes de progression de la hauteur de la masse solide en fonction du temps, selon l'art antérieur (a) et selon l'invention (b, c).

La figure 6 montre des profils d'isoteneurs en silicium (teneurs en ppm) observés typiquement sur des blooms selon l'art antérieur (a) et selon l'invention (b). Ces blooms ont une symétrie circulaire par rapport à l'axe C.

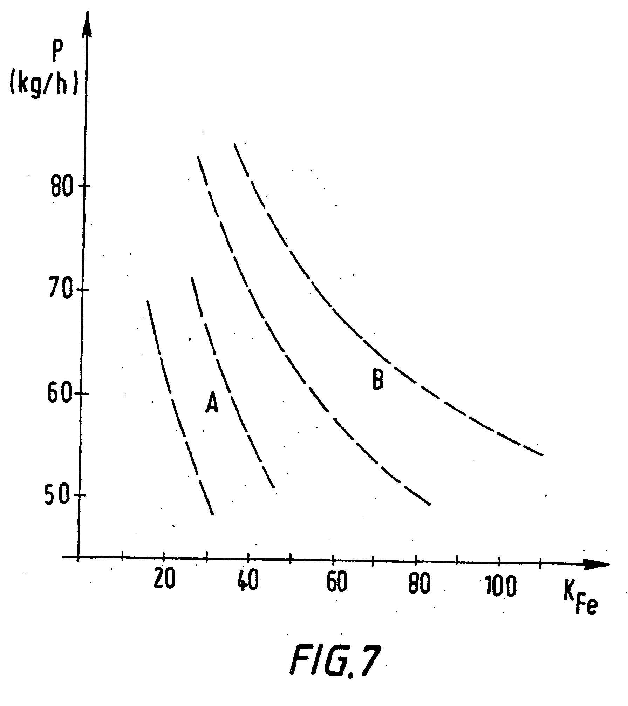

La figure 7 illustre de manière graphique des valeurs typiques de la productivité industrielle P (en kg/h) et du taux de purification effectif moyen K (sans unité) de l'art antérieur (A) et de l'invention (B). Le taux de purification correspond au rapport entre la teneur moyenne en un ou plusieurs éléments donnés du métal de départ et celle du métal purifié en ces mêmes éléments. Les éléments les plus caractéristiques sont généralement les impuretés majeures de l'aluminium primaire produit par électrolyse, à savoir le fer et le silicium.

## Description détaillée de l'invention

Selon l'invention, le procédé de purification de l'aluminium par ségrégation visant à la formation par croissance d'une masse solide (ou "bloom") de très haute pureté à partir d'une masse d'aluminium liquide, appelée liqueur mère, et comprenant la formation de cristaux par cristallisation partielle, un tassage périodique du bloom et cristaux accumulés, et une refusion du bloom par chauffage en cours de croissance, est caractérisé en ce qu'il comprend une mesure périodique de la hauteur H du bloom et l'ajustement de la puissance de chauffage en fonction de la hauteur H mesurée.

Plus précisément, l'invention porte sur un procédé de purification de l'aluminium par ségrégation visant à la formation par croissance d'une masse solide, appelé "bloom", de très haute pureté à partir d'une masse d'aluminium liquide, appelée liqueur mère, ledit procédé étant effectué dans un dispositif comprenant un creuset réfractaire, des moyens de chauffage dudit creuset, au moins un moyen de tassage, des moyens de déplacement vertical du ou de chaque moyen de tassage, et des moyens de détachement, ledit procédé comprenant une opération de croissance dans ledit creuset dudit bloom au fond dudit creuset, ladite opération de croissance comprenant :

- la formation de cristaux d'aluminium par cristallisation sur au moins une surface spécifique dudit dispositif, dite zone de cristallisation, dont la température est inférieure à la température du liquidus de ladite liqueur mère,
- le détachement desdits cristaux à l'aide desdits moyens de détachement,
- la migration (ou chute) desdits cristaux vers le fond dudit creuset sous l'effet de la force de la gravité,
- l'accumulation desdits cristaux sur la surface supérieure de ladite masse solide,
- le tassage desdits cristaux accumulés et de ladite masse solide à l'aide du ou de chaque dit moyen de tassage,
- une refusion partielle de ladite masse solide au cours de la croissance, à l'aide desdits moyens de chauffage,

ledit procédé étant caractérisé en ce qu'il comprend :

- la mesure de la hauteur H dudit bloom au cours de ladite opération de croissance,
- l'ajustement de la puissance de chauffe P en fonction de la hauteur H mesurée de manière à obtenir une vitesse de progression de la hauteur qui est décroissante dans le temps.

Le procédé démarre généralement par le chargement dans le creuset réfractaire d'une certaine masse initiale d'aluminium liquide à purifier et la mise en équilibre thermique de l'ensemble. Il est avantageux de prévoir une étape complémentaire de préchauffage du creuset et du moyen de tassage placé en position basse dans le creuset, avant le chargement en aluminium liquide, de façon à éviter les chocs thermiques aux matériaux et à accélérer la mise en équilibre thermique de l'ensemble.

Les impuretés extraites du métal lors de la cristallisation et lors de la refusion partielle s'accumulent dans la liqueur mère résiduelle qui devient ainsi de plus en plus chargée en impuretés.

En outre, à la fin de l'opération de croissance, le procédé comprend généralement une opération de séparation physique de la liqueur mère résiduelle et du bloom final. Cette opération de séparation est de préférence effectuée lorsque le bloom a atteint une hauteur Hf prédéterminée. Elle peut éventuellement être effectuée lorsqu'une fraction déterminée F de la masse d'aluminium liquide initiale a été solidifiée, F étant de préférence comprise entre 50 et 80 %, et de préférence encore comprise entre 60 et 75 %.

Cette séparation physique peut être effectuée de différentes manières. Elle est effectuée de préférence par basculement du creuset suivi d'un égouttage prolongé du liquide impur (c'est-à-dire de la liqueur mère résiduelle) resté occlus entre les cristaux. De manière avantageuse, après la fin de l'opération de purification, le creuset est extrait du four avec sa virole et est placé sur un basculeur qui permet de vidanger la liqueur mère résiduelle impure et d'égoutter le liquide inclus entre les cristaux. On peut également, pendant cet égouttage, gratter la partie supérieure du bloom, à l'aide d'une hélice en graphite, par exemple, pour en éliminer la zone la plus imprégnée en liquide impur résiduel.

Le procédé peut comprendre une opération supplémentaire de sciage de la tête et/ou du pied du bloom brut, c'est-à-dire du bloom retiré du creuset et refroidi à une température qui permet de le manipuler (typiquement la température ambiante). Généralement, l'opération de sciage est effectuée sur un bloom brut égoutté, c'est-à-dire après avoir effectué une opération d'égouttage du liquide résiduel impur et de refroidissement du solide restant.

La hauteur H peut être mesurée à l'aide du moyen de tassage, ce qui conduit à une simplification significative du dispositif, et permet par conséquent de réduire considérablement la complexité des mécanismes du dispositif, le coût de l'investissement de base et les coûts d'entretien.

Selon un mode de réalisation préféré de l'invention, les cristaux sont formés à la fois sur la paroi interne du creuset et sur une partie du ou de chaque moyen de tassage. Les cristaux sont de préférence formés dans des zones de cristallisation spécifiques.

Pour la formation de cristaux sur le ou chaque dit moyen de tassage, la demanderesse a trouvé particulièrement avantageux de faire en sorte qu'une partie du ou de chaque moyen de tassage est alternativement immergée et émergée, de manière à entraîner le refroidissement d'une partie spécifique du ou de chaque moyen de tassage, dite zone de cristallisation, jusqu'à une température inférieure à la température du liquidus de la liqueur mère lors de l'émersion et la formation de cristaux dans ladite zone lors de l'immersion. Le refroidissement peut être simplement obtenu par rayonnement et/ou par convection naturelle ou forcée. Le temps d'immersion Ti et le temps d'émersion Te peuvent être fixes ou variables.

La demanderesse a constaté que les immersions et émersions alternées du moyen de tassage, destinées à détacher les cristaux, se traduisaient aussi par une augmentation de la quantité de cristaux formés sur le moyen de tassage. Cette augmentation est d'autant plus forte que le rapport du temps Te d'émersion au temps Ti d'immersion est élevé. Plus précisément, cette augmentation est d'autant plus forte que le rapport du temps Tr passé en position haute (position de refroidissement) au temps Tc passé en position basse (position de tassage et de cristallisation) est élevé, alors que le temps passé en position basse diminuait sensiblement en valeur absolue. Ainsi, le temps d'émersion Te est de préférence supérieur au temps d'immersion. Ti. Plus précisément, le temps passé par le moyen de tassage en position haute Tr est de préférence supérieur au temps passé en position basse Tc. La demanderesse a constaté que la masse de cristaux fabriqués sur la tige était une fonction croissante de Tr/Tc et décroissante de Tr + Tc.

A titre d'exemple, pour un four d'une capacité de 2 tonnes, entre un cycle élémentaire (A) pour lequel Ti = 30 sec et Te = 8 sec, et un cycle élémentaire (B) pour lequel Ti =15 sec et Te = 23 sec, avec dans les deux cas une vitesse de montée ou de descente de la tige de 0,20 m/sec environ entre les positions haute et basse, la demanderesse a constaté un taux de production de cristaux pour le cycle B de 40 kg/heure supérieur à celui du cycle A, si on maintient la même courbe de consigne pour la croissance du bloom. Cette augmentation du taux de production des cristaux, pour une même courbe de croissance, s'accompagne d'une augmentation de la puissance de chauffe de 4,5 kW en moyenne et conduit à un taux de refusion des cristaux formés plus élevé pour le cycle élémentaire B que pour le cycle A Ces différences entraînent une amélioration de la pureté du métal à productivité constante. Typiquement, les teneurs en fer et en silicium des blooms fabriqués en adoptant le cycle B étaient en moyenne inférieurs de 30 % à celles des blooms fabriqués en adoptant le cycle A (pour une taille finale de bloom constante et une durée totale d'opération constante), ce qui représente une différence de taux de purification considérable.

La séquence formée par une émersion et une immersion forme un cycle élémentaire de purification. Chaque cycle élémentaire peut être de durée variable ou de durée sensiblement constante. La durée de chaque cycle est de préférence comprise entre 20 secondes et 5 minutes. Un rythme trop rapide conduit à la formation d'une faible quantité de cristaux, à chaque cycle élémentaire, et rend plus difficile le détachement (ou écroutage) correct de ces cristaux. Un rythme trop lent conduit à la formation de croûtes de cristaux trop épaisses et trop dures, lors de chaque cycle élémentaire, ce qui induit parfois un blocage des écrouteurs et conduit à une baisse de la quantité de cristaux formés par unité de temps.

L'opération de tassage comprend de préférence la mise sous pression de la masse solide à l'aide du ou de chaque moyen de tassage et le maintien de la pression pendant une période de temps Tc sensiblement égale au temps d'immersion Ti (de préférence au moins égale à 95 % de Ti). Le maintien en position haute couvre de préférence une période Tr sensiblement égale au temps Te d'émersion (de préférence au moins égale à 95 % de Te).

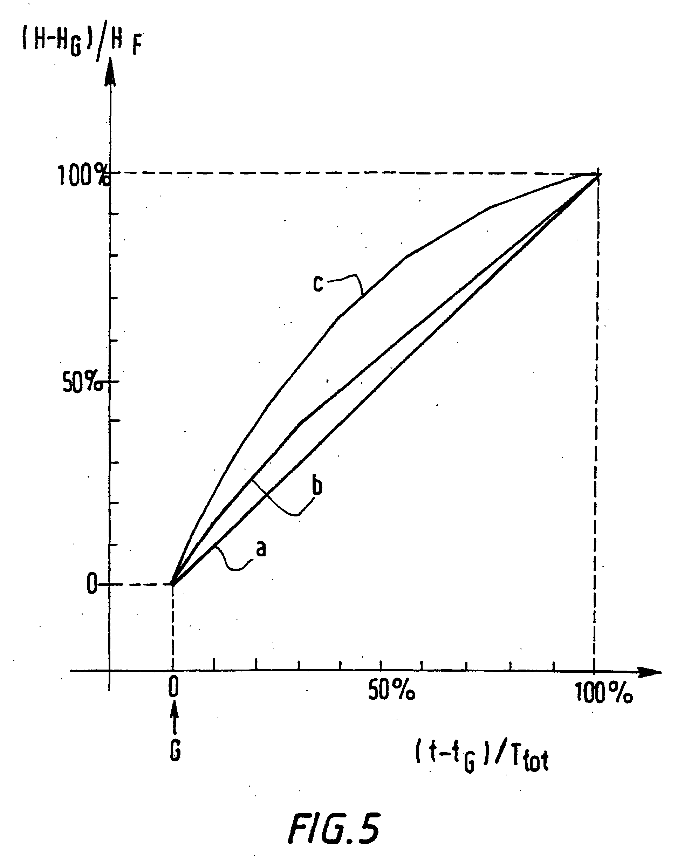

La profondeur d'immersion du moyen de tassage est fonction de la hauteur H de la masse solide : elle est importante au début de l'opération de purification, puis décroît progressivement au fur et à mesure de la croissance de la masse solide. L'opération de tassage comprime la masse solide (22) et écrase les cristaux accumulés (21) sur sa surface supérieure, en en expulsant une partie du liquide impur inclus entre les cristaux. En outre, ce tassage, en écrasant le bloom, amène de nouvelles parties solides au contact des parois chaudes et en facilite la refusion partielle. L'opération de tassage comprend de préférence un seul mouvement de compression du ou de chaque dit moyen de tassage pendant un temps Tc, qui est suivi de ladite mesure de la hauteur H(t) de la masse solide tassée. En pratique, lorsque la hauteur est mesurée à l'aide du moyen de tassage, elle ne peut être mesurée qu'à partir du moment où la masse solide a atteint une certaine hauteur minimale Hm correspondant au point le plus bas que puisse atteindre le moyen de tassage ; ce temps est appelé "accrochage" (identifié par la lettre G dans la figure 5). Il est pratique de mesurer le temps t à compter de l'accrochage.

L'opération de détachement des cristaux sur le creuset et le ou chaque moyen de tassage peut être effectué lorsque le ou chaque moyen de tassage est émergé. L'opération de détachement des cristaux sur le ou chaque moyen de tassage peut aussi être effectué au cours de l'émersion du ou de chaque dit moyen de tassage.

La migration des cristaux vers le fond du creuset se produit de préférence essentiellement durant la période d'émersion Te du ou de chaque moyen de tassage.

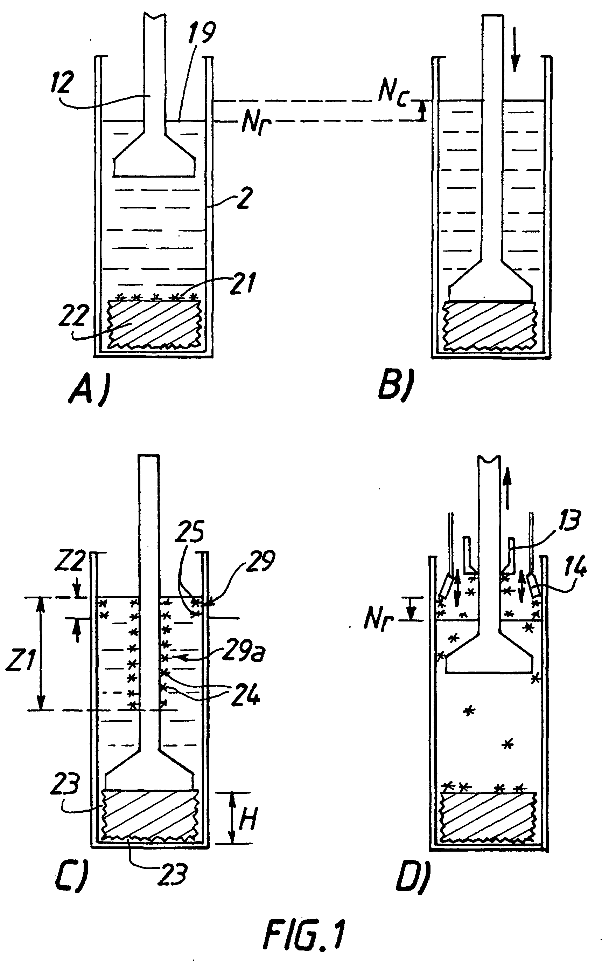

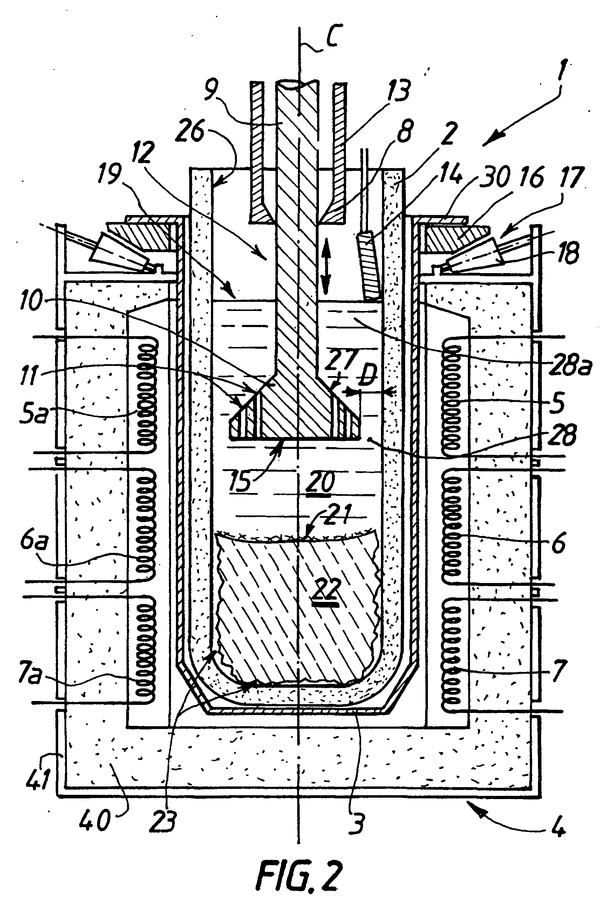

L'opération de refusion de la masse solide en cours de croissance est un processus sensiblement continu. En pratique, la refusion n'intervient qu'autour de la masse solide tassée (22), de sorte que la zone de refusion effective (23) couvre le fond du creuset et sa paroi jusqu'à une hauteur H. La refusion intervient sur sensiblement toute la surface périphérique de la masse solide (22), y compris la partie haute de cette surface située au niveau de la zone d'accumulation des cristaux (21), comme le montrent les figures 1 à 3. L'ajustement de la puissance de chauffe P, qui est fonction de la hauteur H mesurée de la masse solide (22), porte au moins sur la puissance appliquée au droit de l'ensemble de la masse solide. Selon l'invention, le taux de refusion de ladite masse solide est variable au cours de l'opération complète de purification et suit de préférence une progression déterminée. La demanderesse a constaté que le taux de purification moyen pouvait être augmenté de manière significative lorsque le taux de refusion suit une courbe de progression telle que le rapport entre la masse Mr de cristaux refondus et la masse Mc de cristaux formés (Mr/Mc) était, pour chaque cycle élémentaire, une fonction non décroissante de la hauteur H(t) de la masse tassée en fonction du temps t, c'est-à-dire de la masse solide après l'opération de tassage. En d'autres termes, le taux de refusion visé est constant ou croissant lorsque la hauteur H(t) augmente. La masse initialement produite Mc est égale à la somme de la masse après refusion et de la masse refondue. On peut également exprimer la refusion en termes d'un taux de lavage, qui est égal au rapport entre la masse refondue et la masse restante après refusion partielle.

Un tel taux de refusion conduit à une courbe de croissance Ho(t) visée de la masse solide qui est non linéaire et convexe, c'est-à-dire de pente décroissante ou nulle (une telle courbe est illustrée à la figure 5). En d'autres termes, la vitesse de progression de la hauteur H(t) est décroissante dans le temps. La courbe de croissance selon l'invention est avantageusement obtenue par une régulation de la puissance des moyens de chauffage à l'aide de la valeur de la hauteur H(t) de la masse solide mesurée à chaque cycle élémentaire, que l'on compare à la valeur Ho(t) de consigne (qui correspond à la courbe type de croissance souhaitée de la masse tassée au cours du temps). Typiquement, lorsque la valeur H(t) mesurée sur quelques cycles élémentaires consécutifs est supérieure à la valeur Ho(t) de consigne, on augmente la puissance de chauffe ; on la diminue dans le cas contraire. De préférence, ladite régulation prend en compte simultanément l'écart entre la hauteur H(t) effectivement mesurée (de préférence, une moyenne sur quelques minutes ou quelques cycles élémentaires consécutifs (moyenne glissante)) et la valeur de consigne Ho(t), et la tendance de cet écart à augmenter ou à diminuer dans le temps, ceci afin d'éviter notamment les phénomènes dit de "pompage" de la régulation. Il a ainsi été trouvé avantageux d'ajuster la puissance de chauffe P en fonction de l'écart entre la hauteur mesurée H et une valeur de consigne Ho, c'est-à-dire de piloter la puissance P en fonction de H - Ho, Ho étant une valeur de consigne prédéterminée et fonction du temps écoulé depuis l'accrochage.

De préférence encore, l'incrément de puissance ΔP imposé à un moment t est de la forme :

$$\Delta P(t) = A \times [H(t) - Ho(t)] + B \times \{\Delta[H(t) - Ho(t)]/ \Delta t\},$$

où A et B sont des coefficients positifs empiriques, qui sont ajustés de façon à permettre un rattrapage rapide de la hauteur de consigne, mais sans engendrer de "pompage" autour de cette hauteur de consigne, malgré l'inertie thermique inévitable du dispositif (il faut généralement quelques minutes pour qu'un incrément de puissance se traduise par une inflexion de la courbe de montée des cristaux). La régulation de la puissance de chauffe est avantageusement assurée par un système informatisé.

La demanderesse a observé que, de façon surprenante, pour une productivité donnée, c'est-à-dire en fixant une durée donnée pour l'opération complète de ségrégation (et donc pour obtenir un bloom de poids déterminé), la façon de conduire le cycle, et en particulier la loi exprimant la vitesse à laquelle on fait croître le bloom, en fonction de la hauteur du bloom (ou masse solide) déjà tassée, avait une importance considérable sur la pureté moyenne du bloom final obtenu. En d'autres termes, de manière inattendue, un pilotage de la puissance de chauffe visant à ce que la hauteur du bloom tassé augmente selon des règles particulières conduit, à productivité donnée, à améliorer sensiblement les coefficients de purification obtenus.

L'espace libre laissé entre le ou chaque moyen de tassage et la paroi interne du creuset est de préférence tel que les cristaux détachés subissent un phénomène dit de lavage durant leur chute vers le fond du creuset. Ce phénomène se produit lorsque les cristaux passent à proximité de la paroi, dans une zone où l'aluminium liquide est à une température légèrement plus élevée que la température du liquidus, ce qui entraîne une refusion partielle de la surface des cristaux, qui est plus riche en impuretés que la partie centrale, ce qui conduit à une amélioration de la purification.

Selon une variante de l'invention, les dimensions du ou de chaque moyen de tassage et du creuset sont telles que, lorsque le ou chaque moyen de tassage est en position basse (immergé), la surface libre de l'aluminium liquide monte de manière à couvrir sensiblement toute la surface de la zone de cristallisation sur la paroi interne du creuset, et telles que, lorsque le ou chaque moyen de tassage est mis en position haute (émergé), la surface libre de l'aluminium liquide descend de manière à ce que la partie supérieure de la couronne de cristaux (25) formée dans ladite zone émerge, au moins partiellement, du métal liquide et à ce que ces cristaux puissent être détachés sans que les moyens de détachement (et plus précisément les racleurs de ceux-ci) pénètrent dans le métal liquide. Cette variante de l'invention permet de réduire l'usure des racleurs, rendant moins fréquente les interventions sur les moyens de détachement, facilite l'entretien du dispositif et réduit les risques de pollution de la liqueur mère, ce qui conduit à un taux de purification plus élevé et mieux maîtrisé.

Tel qu'illustré à la figure 1, selon un mode de réalisation préféré, le procédé de purification par ségrégation selon l'invention est caractérisé en ce qu'il comprend :

- la réalisation des cycles élémentaires de purification, conduisant à la formation d'une masse solide d'aluminium purifié (22) reposant sur le fond du creuset (2), chaque cycle comprenant :

    . le maintien en position haute du moyen de tassage (12), pendant un temps Tr, la surface libre (19) de l'aluminium liquide étant à un niveau Nr (figure 1 A) ;
    . l'abaissement du moyen de tassage (12) et la mise sous pression de la masse solide (22) et des cristaux (21) accumulés sur sa surface supérieure par le moyen de tassage, la surface libre (19) de l'aluminium liquide s'étant élevée jusqu'au niveau Nc (figure 1 B) ;
    . le maintien de ladite pression et la formation de cristaux (24, 25), à la fois sur le moyen de tassage et sur la surface du creuset, dans lesdites zones de cristallisation (29, 29a), pendant un intervalle de temps Tc de préférence fixe (figure 1 C) ;
    . la mesure de la hauteur H de la masse solide à l'aide du moyen de tassage ;
    . la remontée du moyen de tassage jusqu'à la position haute, dite de refroidissement, la surface libre (19) de l'aluminium liquide étant redescendue au niveau Nr ;
    . une opération de détachement des cristaux à l'aide des moyens de détachement (13, 14), de préférence hors de l'aluminium liquide, les cristaux ainsi détachés migrant ensuite vers la partie basse dudit creuset sous l'action de la gravité (figure 1 D) ;

- la refusion partielle, en continu, de la masse solide ;
- l'ajustement de la puissance de chauffe P en fonction de la hauteur H ;
- l'arrêt des cycles élémentaires de purification lorsque la masse solide a atteint une hauteur Hf prédéterminée.

Lesdites zones de cristallisation couvrent une longueur Z1 du creuset et Z2 de la tige du ou de chaque moyen de tassage.

Selon l'invention, le dispositif de purification de l'aluminium par ségrégation, apte à former par croissance une masse d'aluminium solide (ou "bloom") de très haute pureté à partir d'une masse d'aluminium liquide appelée liqueur mère, comprend un creuset réfractaire, un four muni de moyens de chauffage du creuset, des moyens pour former des cristaux par cristallisation partielle sur des surfaces spécifiques, dites zones de cristallisation, des moyens pour détacher lesdits cristaux, au moins un moyen de tassage desdits cristaux et dudit bloom, des moyens pour déplacer verticalement le ou chaque moyen de tassage, et des moyens pour produire une refusion dudit bloom par chauffage en cours de croissance, et est caractérisé en ce qu'il comprend des moyens pour mesurer la hauteur H de ladite masse solide, pour comparer la hauteur H mesurée à une hauteur de consigne Ho prédéterminée et variable dans le temps et pour piloter la puissance de chauffe desdits moyens de chauffage en fonction de la différence entre ladite hauteur H mesurée et la hauteur de consigne Ho de manière à obtenir une vitesse de progression de la hauteur qui est décroissante dans le temps. Les moyens de refusion permettent, de préférence, une refusion sensiblement continue de la surface périphérique du bloom.

Selon un mode réalisation préféré, le dispositif (1) selon l'invention comprend un creuset réfractaire (2), un four (4) muni de moyens de chauffage (5, 5a, 6, 6a, 7, 7a) du creuset, au moins un moyen de tassage (12) et des moyens pour déplacer verticalement le ou chaque moyen de tassage, et est caractérisé en ce que le ou chaque moyen de tassage (12) comprend une tige (9) et un embout (10) de tassage solidaire de ladite tige, en ce qu'il comprend des moyens pour former des cristaux (24, 25) par cristallisation partielle à la fois sur la tige (9) et sur la paroi interne (26) dudit creuset, dans des zones (29, 29a) dites de cristallisation, en ce qu'il comprend des moyens (13, 14) pour détacher lesdits cristaux de ladite tige et de ladite paroi interne, en ce qu'il existe un espace libre (28) entre l'embout (10) et la paroi interne (26) dudit creuset suffisant pour permettre le passage des cristaux détachés par lesdits moyens de détachement lors de leur migration vers le bas du creuset sous l'action de la gravité, en ce qu'il comprend des moyens pour mesurer la hauteur H de la masse solide (22) au cours de sa croissance, et en ce qu'il comprend des moyens pour piloter la puissance de chauffe desdits moyens de chauffage en fonction de ladite hauteur H mesurée qui permet d'obtenir une vitesse de progression de la hauteur H dans le temps qui est de préférence déterminée.

Selon une réalisation préférée de l'invention, le dispositif ne possède qu'un unique moyen de tassage.

Le four (4) comprend de préférence une cloison isolante (40) et un caisson métallique (41). Les moyens de chauffages (5, 5a, 6, 6a, 7, 7a) sont de préférence répartis le long du creuset (2). Il est avantageux de pouvoir contrôler individuellement, ou par groupes, lesdits moyens de chauffages, de manière à pouvoir ajuster la puissance de chauffage de façon déterminée le long du creuset. En particulier, cette répartition des moyens de chauffage permet l'ajustement de la puissance de chauffe appliquée au droit de l'ensemble du bloom.

Le dispositif comprend de préférence des moyens pour mesurer la hauteur H de la masse tassée (22) à l'aide du moyen de tassage (12). Pour cela, le dispositif peut comprendre des moyens pour repérer, notamment lors des opérations de tassage, l'enfoncement dans le métal liquide du moyen de tassage et en déduire la hauteur de bloom tassé. Le dispositif est de préférence muni de moyens permettant de détecter la force de réaction de la masse solide (22), de manière à contrôler efficacement l'écrasement de ladite masse et de suivre la progression de la formation de celle-ci, qui est donnée par sa hauteur H(t) par rapport au fond du creuset par rapport au temps t.

Le dispositif comprend un moyen pour comparer, à chaque opération de tassage, la hauteur effectivement tassée à une hauteur de référence souhaitée à ce moment de l'opération Ho(t) et pour piloter la puissance de chauffe P en fonction de la différence entre H(t) et Ho(t). Le dispositif peut comprendre un moyen de pilotage de la puissance de chauffe, de préférence informatisé, qui permet d'augmenter la puissance lorsque H > Ho et de la baisser si H < Ho. Ce moyen de pilotage agit sur lesdits moyens de chauffage pour obtenir la puissance de chauffe souhaitée.

Lesdits moyens pour former des cristaux sur la tige comprennent un refroidissement de celle-ci, par rayonnement et/ou convection naturelle ou forcée, lorsqu'elle est en position haute (émersion). Lesdits moyens pour former des cristaux sur la paroi interne du creuset comprennent un abaissement de la température de ladite paroi par effet de drain thermique. Le refroidissement de la paroi du creuset dans la zone de cristallisation (29) peut être efficacement obtenu en prolongeant la paroi du creuset au-dessus de la zone chauffée, voire en dehors du four (4), d'une longueur suffisante pour entraîner des pertes thermiques notamment par rayonnement et convection. La partie aérienne (32) du creuset fonctionne alors comme un drain thermique, par effet d'ailette. La longueur (Le) de ladite partie aérienne (32), telle que mesurée à partir de la partie supérieure (33) de la virole (3), est typiquement comprise entre 2 et 15 cm pour un dispositif d'une capacité de 2 tonnes et pour une épaisseur de cloison T de l'ordre de 5 cm.

La cristallisation partielle se produit et donne lieu à la formation de cristaux, dans les zones de cristallisation (29) et (29a), lorsque la température en surface des parois du creuset et de la tige est inférieure à la température du liquidus de la liqueur mère. Dans ces zones, le flux thermique net est alors dirigé du métal liquide vers la paroi du creuset et vers la tige.

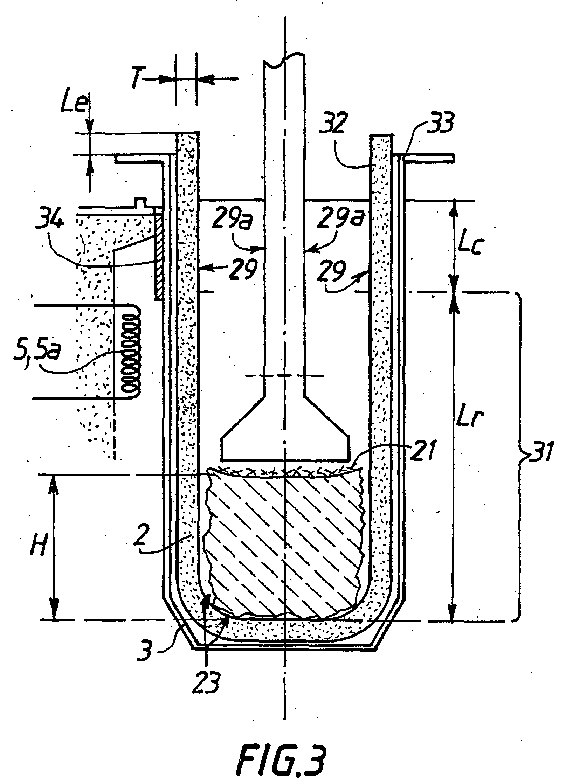

La limite basse de la zone de cristallisation (29) sur le creuset correspond à l'endroit de, la paroi interne où la température est égale à la température du liquidus. La zone située en dessous de la zone de cristallisation correspond à la zone dite de refusion (31) (Figure 3). La zone étroite de transition entre la zone de cristallisation et la zone de refusion est appelée "point neutre". Dans la zone de refusion, le flux thermique est dirigé de la paroi du creuset vers le métal et la température de la paroi est supérieure à la température du liquidus du métal. Sur le creuset, le rapport entre la hauteur de la zone de cristallisation (Lc) et la hauteur de la zone de refusion (Lr) est de préférence inférieure à 0,3, et de préférence encore inférieure à 0,25. En pratique, la refusion n'intervient qu'autour de la masse solide tassée (22), de sorte que la zone de refusion effective (23) couvre le fond du creuset et sa paroi jusqu'à une hauteur H. Ainsi, sensiblement toute la surface périphérique du bloom est refondue, y compris la partie haute de cette surface.

Il est également avantageux d'interposer un écran thermique (34) entre le creuset et les moyens de chauffage (5 et 5a) de la partie supérieure du four, ledit écran couvrant de préférence une surface légèrement supérieure à la zone de cristallisation (29). Cet écran permet de fixer la position approximative du point neutre séparant la zone de cristallisation et la zone de refusion, sur la paroi interne du creuset, et élimine une source forte de variabilité de cette position, lorsque la puissance de chauffe varie.

La section de la tige est de préférence inférieure à celle de l'embout. L'espace libre (28) laissé entre la périphérie de l'embout du moyen de tassage et la paroi interne du creuset est de préférence tel que les cristaux peuvent s'accumuler au fond du creuset aussi rapidement qu'ils sont détachés de la tige et de la paroi du creuset par les moyens de détachement. La distance D entre l'embout et la surface interne du creuset est avantageusement telle que les cristaux détachés subissent un phénomène dit de lavage durant leur chute vers le fond du creuset. Ce phénomène se produit lorsque les cristaux passent à proximité de la paroi, dans une zone où l'aluminium liquide est à une température légèrement plus élevée que la température du liquidus, ce qui entraîne une refusion partielle de la surface des cristaux, qui est plus riche en impuretés que la partie centrale, ce qui conduit à une amélioration de la purification. De préférence, la distance D est sensiblement uniforme et supérieure ou égale à 30 mm, et de préférence encore comprise entre 50 et 100 mm. Une distance trop grande impose une surface de damage (15) faible qui réduit l'efficacité de l'opération de tassage. Dans ces conditions, l'embout tend à rapprocher les cristaux de la paroi du creuset et les force à passer à proximité de la surface de la paroi où la température de l'aluminium liquide est effectivement légèrement plus élevée que la température du liquidus. Il est également avantageux, lorsque le moyen de tassage est en position haute, de faire en sorte que la partie inférieure de l'embout reste en dessous du point neutre, de manière à favoriser le phénomène de lavage.

L'espace libre (28a) entre la tige (9) et la paroi interne (26) du creuset est tel que les moyens de détachement (13, 14) peuvent se mouvoir sans encombre et tel que les cristaux (24, 25) peuvent se former rapidement. La section de la tige (9) est de préférence de forme circulaire et son diamètre est de préférence compris entre 20 % et 35 % du diamètre intérieur du creuset. Un diamètre trop faible conduit à une résistance mécanique qui peut être insuffisante pour tasser le bloom, et à un faible taux de fabrication de cristaux causé par une limitation du flux thermique évacué. Un diamètre trop important conduit à un volume immergé qui limite trop fortement la capacité utile du creuset et donc la productivité.

La tige (9) et l'embout (10) sont de préférence, en tout ou partie, en graphite, ce qui permet de limiter considérablement les risques de pollution de l'aluminium liquide. La conductivité thermique élevée du graphite permet de refroidir efficacement la tige dans la zone de cristallisation (29a) de celle-ci et d'évacuer rapidement l'énergie thermique résultant de la cristallisation. La tige (9) est de préférence encore, en toute ou partie, en graphite traité contre l'oxydation à l'air par imprégnation d'un composé tel que le phosphate d'aluminium ou de zinc, l'acide phosphorique ou un mélange de ceux-ci, ou l'acide borique. On peut également imprégner partiellement la zone superficielle de la tige par un composé anti-abrasion tel que le SiC. Il est également avantageux de munir la tige (9) d'un revêtement ou gainage en céramique permettant d'éviter l'oxydation et l'abrasion de celle-ci, tel qu'un gainage en carbure de silicium ou en Sialon (terme qui signifie "oxynitrure de silicium et d'aluminium" ou "Silicon Aluminium Oxinitride" en anglais). Ces dispositions permettent d'éviter la production de particules de graphite, qui sont le plus souvent désolidarisées par oxydation, qui sont eritraînées par les moyens de détachement et qui se retrouvent ainsi dans le bloom. Lors de l'utilisation du métal purifié, ces particules peuvent avoir des effets néfastes, tels que la formation de bulles de gaz ou de décohésion locales au droit des particules de graphite.

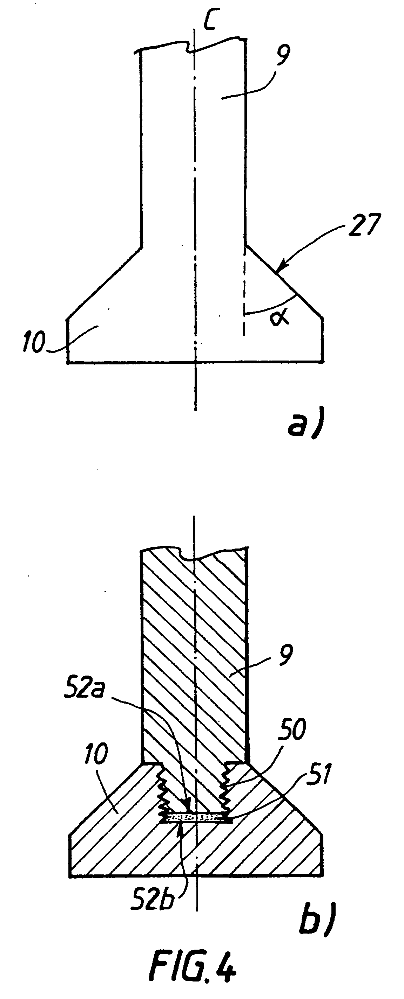

La partie supérieure (27) de l'embout (10) est avantageusement de forme tronconique, tel qu'illustré à la figure 4a). L'angle du cône, c'est-à-dire l'angle α entre l'axe C de la tige et la surface (27) du cône, est de préférence compris entre 30° et 60°, et de préférence encore compris entre 40° et 50°. Un angle du cône trop grand, c'est-à-dire plus grand que l'angle de talus d'éboulement naturel des cristaux, peut conduire à l'accumulation de cristaux sur la surface tronconique (27), ce qui réduit l'efficacité globale du dispositif car ces cristaux ne participent pas à la formation du bloom (22) et à la purification complémentaire par refusion. Un angle du cône très faible conduit à un embout très long, qui utilise une partie appréciable du volume utile du creuset et qui diminue par conséquent la quantité d'aluminium chargée dans le creuset et susceptible de subir l'opération de purification. D'autre part, l'allongement de l'embout diminue sensiblement la longueur de tige utilisable pour former des cristaux écroutables, c'est-à-dire des cristaux qui puissent être aisément détachés par les moyens de détachement (13).

Il est également avantageux de munir l'embout (10) du moyen de tassage de canaux (11) entre la surface inférieure, dite surface de damage, (15) et la surface supérieure (27) dudit embout, ce qui améliore l'écoulement du métal liquide, notamment lors de l'opération de tassage de la masse solide (22).

Selon une variante avantageuse de l'invention, l'embout (10) et la tige (9) forment deux pièces distinctes, quoique solidaires, et la conductivité thermique du joint entre ces deux pièces est faible, c'est-à-dire au moins 10 fois plus faible que celle de la tige, de manière à établir une coupure thermique au moins partielle entre la tige et l'embout. Cette coupure thermique permet de limiter sensiblement le refroidissement de l'embout par l'intermédiaire de la tige, notamment lorsque cette dernière est en position haute et proche de la surface de l'aluminium liquide (comme c'est le cas en fin de cycle de purification), ce qui permet de limiter la formation de cristaux sur les surfaces de l'embout, lesquels cristaux étant difficilement, voire pas du tout, accessibles aux moyens de détachement. La tige et l'embout sont de préférence en un même matériau de manière à éviter les problèmes de dilatation différentielle, et de préférence en graphite. Comme le montre la figure 4b), un mode de réalisation préféré de cette variante consiste à établir un joint par visserie (50) entre la tige et l'embout et à placer un disque (51) en matériau isolant thermique sur une partie importante de la surface de contact entre les deux pièces, de préférence au moins entre les deux parties planes (52a, 52b), de manière à réduire le flux thermique d'au moins 20 % par rapport à un embout et une tige formant une pièce unique. De préférence, ledit matériau isolant possède une conductivité thermique au moins 10 fois, et de préférence encore au moins 100 fois, plus faible que celle de la tige.

Selon une variante de l'invention, les dimensions du ou de chaque moyen de tassage et du creuset sont telles que, lorsque le ou chaque moyen de tassage est en position basse, la surface libre de l'aluminium liquide monte de manière à couvrir sensiblement toute la surface de la zone de cristallisation (29) sur la paroi interne du creuset, et telles que, lorsque le ou chaque moyen de tassage est mis en position haute, la surface libre de l'aluminium liquide descend de manière à ce que la partie supérieure de la couronne de cristaux (25) formée dans ladite zone émerge, au moins partiellement, du métal liquide et à ce que ces cristaux puissent être détachés sans que les moyens de détachement (et notamment les racleurs de ceux-ci) pénètrent dans le métal liquide. Cette variante de l'invention permet de réduire l'usure des racleurs, rendant moins fréquente les interventions sur les moyens de détachement, facilite l'entretien du dispositif et réduit les risques de pollution de la liqueur mère, ce qui conduit à un taux de purification plus élevé et mieux maîtrisé (notamment lorsqu'on utilise l'invention pour la purification de métal déjà raffiné ou "ultra-purification" afin d'obtenir des puretés supérieures à 99,999 %).

Les moyens de détachement (13) et (14) permettent de détacher les cristaux (24, 25) par raclage de la tige. De préférence, le dispositif comprend des moyens pour que l'opération de détachement des cristaux soit effectuée, sur la tige, lorsque le ou chaque moyen de tassage est en cours de remontée et, sur la surface du creuset, lorsque le ou chaque moyen de tassage est en position haute (émersion). De préférence encore, les moyens de détachement (13) sur la tige comprennent un moyen pour positionner les écrouteurs ou racleurs (8) contre la tige lorsque celle-ci amorce sa remontée, et pour les en écarter une fois la tige arrivée en position haute (position de refroidissement). Selon un mode de réalisation particulièrement avantageux, les racleurs sont maintenus à un niveau déterminé par rapport au rebord du creuset et l'opération de détachement s'effectue lors du mouvement de remontée du ou de chaque moyen de tassage. En pratique, les racleurs peuvent être plaqués sur la tige uniquement lorsque la tige effectue sa remontée. Selon une variante de ce mode de réalisation, les racleurs ne couvrent qu'une partie de la périphérie de la tige (environ la moitié), c'est-à-dire qu'il sont de forme sensiblement semi-circulaire, et l'opération de détachement est effectué sur toute la périphérie de la tige par un mouvement vertical combiné à un mouvement de rotation de la tige.

Les moyens de détachement peuvent être munis d'un système de réglage de leur position par rapport à la surface libre de l'aluminium liquide, de manière à pouvoir compenser l'abaissement du niveau de la surface libre au fur et à mesure que la masse solide tassée croît et entraîne une diminution du volume total du fait de la différence de densité entre l'aluminium liquide et l'aluminium solide.

Selon un mode réalisation préféré de l'invention, le dispositif (1) est caractérisé en ce que le creuset (2) possède une symétrie cylindrique autour d'un axe C, dit de rotation, en ce que ledit dispositif comprend des moyens (17) pour faire tourner le creuset autour de l'axe de rotation C, et en ce que le raclage de toute la périphérie de la zone de cristallisation (29) sur le creuset est obtenue par l'action combinée des mouvements de va-et-vient verticaux du moyen de détachement (14) et de rotation dudit creuset. Une telle configuration réduit considérablement l'encombrement des moyens de détachement (13, 14) et réduit la complexité des systèmes mécaniques permettant l'actionnement indépendant desdits moyens.

Selon une variante préférée de ce mode de réalisation, le creuset (2) est inséré dans une virole en acier (3) munie d'une collerette (30) et la virole (3) repose sur des rouleaux tronconiques inclinés (18) par l'intermédiaire d'une platine (16) supportant l'ensemble creuset/virole. Les rouleaux tronconiques permettent non seulement une rotation aisée du creuset mais assurent également un auto-centrage de la platine (16) par rapport à l'axe du dispositif. La mise en rotation du creuset peut être efficacement obtenue par motorisation de l'un des rouleaux tronconiques.

Des blooms peuvent être obtenus industriellement à l'aide du dispositif selon l'invention, notamment par le chargement dans le creuset réfractaire d'une masse initiale d'aluminium liquide à purifier, dite liqueur mère, la formation de cristaux par cristallisation partielle de ladite liqueur mère dans les zones de cristallisation sur la tige (29a) et sur la paroi du creuset (29), le détachement des cristaux à l'aide des moyens de détachement (13) et (14), le tassage périodique des cristaux accumulés (21) et de la masse solide (22) au fond dudit creuset à l'aide du moyen de tassage (12), de manière à faire croître progressivement une masse solide compacte, appelée "bloom", la refusion partielle progressive de ladite masse solide, de manière à apporter une purification supplémentaire de la masse solide, le pilotage de la puissance de chauffe des moyens de chauffage (5 à 7a) en cours de croissance du bloom en fonction de H, de manière à avoir une vitesse de progression de H qui est de préférence déterminée et décroissante, et la séparation physique de la liqueur mère et de la masse solide finale, appelée bloom final.

Les cristaux se forment sur la tige surtout lorsqu'elle est immergée dans la liqueur mère, alors qu'ils se forment sur la paroi du creuset de manière quasiment continue.

Durant les cycles élémentaires de purification, l'embout (10) est de préférence toujours immergé dans la liqueur mère, de manière à éviter la formation de cristaux sur sa surface supérieure ou inférieure, lesquels cristaux contribuent à diminuer le volume de liqueur mère résiduelle et donc à augmenter sa teneur en impuretés résiduelles sans participer à la formation de la masse de cristaux purifiés tassés.

L'invention s'applique également à l'ultra-purification d'aluminium qui, partant d'un aluminium de pureté au moins égale 99,97 %, permet d'obtenir un aluminium d'une pureté minimale de 99,998 %. Un tel métal est notamment destiné à la métallisation de circuits intégrés. Pour un tel degré de purification, la difficulté supplémentaire réside dans la nécessité d'éliminer, de façon aussi complète que possible, les impuretés radioactives, et en particulier l'uranium et le thorium. D'une façon générale, le métal de départ à purifier est un métal déjà raffiné électrolytiquement et présentant des teneurs déjà très réduites en éléments péritectiques tels que Ti, V, Zr et Cr (moins de 1 ppm au total), et très modérées en impuretés eutectiques habituelles telles que Fe, Si, Cu (moins de 5 ppm chacun). Ce métal, en revanche, contient des teneurs en uranium et thorium rédhibitoires pour la métallisation des circuits intégrés, par exemple plus de 0,1 ppm de thorium et plus de 0,01 ppm d'uranium, alors que les exigences des fabricants de circuits intégrés correspondent actuellement à des teneurs limitées à un total U + Th inférieur à 0,0007 ppm. Cette limitation à des teneurs très faibles en impuretés radioactives ne fait que se renforcer avec la diminution de la taille des transistors élémentaires constituant les circuits, et le souhait des fabricants évolue vers des limites, pour le total U + Th, inférieures à 0,0001 ppm, ce qui nécessite de diviser par plus de 1000 la teneur initiale en ces impuretés du métal raffiné. Avec les procédés de l'art antérieur, l'obtention de teneurs aussi limitées en impuretés radioactives ne peut se faire qu'en pratiquant des purifications en cascade (par exemple deux ségrégations successives), ce qui augmente considérablement les coûts de production et abaisse très notablement le rendement en métal purifié final, par rapport au métal électroraffiné de départ.

**Essais**

<u>Série d'essais 1</u>

Des essais industriels ont été réalisés avec des dispositifs de différentes capacités. Dans ces dispositifs, le moyen de tassage était unique et ne descendait pas jusqu'au fond du creuset. Dans ces conditions, le tassage ne commence à se produire que lorsque la masse solide atteint la position d'enfoncement maximal du moyen de tassage ; c'est à ce moment que se produit ledit "accrochage". Cette caractéristique constitue une variante non limitative du dispositif et du procédé selon l'invention.
Ces essais ont porté sur trois types de courbes de croissance (ou "courbes de montée") des blooms :

a) Vitesse de montée Vm sensiblement constante pendant le temps total (Ttot) de la croissance (art antérieur) ;
b) Vitesse de montée comprenant trois paliers de vitesse de montée : un palier initial égal à 1,5 fois Vm, pendant 10% de Ttot, suivi d'un palier égal à 1,2 fois Vm pendant 20% de Ttot, et terminé par un palier égal à 0,87 fois Vm pendant 70 % de Ttot ;
c) Vitesse de montée comprenant huit paliers de vitesse de montée : un palier initial égal à 2,4 fois Vm, pendant 5% de Ttot, suivi d'un palier égal à 2,0 fois Vm pendant 10% de Ttot, suivi d'un palier égal à 1,6 fois Vm pendant 10% de Ttot, suivi d'un palier égal à 1,2 fois Vm pendant 15% de Ttot, suivi d'un palier égal à 0,9 fois Vm pendant 15% de Ttot, suivi d'un palier égal à 0,65 fois Vm pendant 20% de Ttot, suivi d'un palier égal à 0,375 fois Vm pendant 20% de Ttot, et terminé par un palier à vitesse de montée nulle pendant 5 % de Ttot.

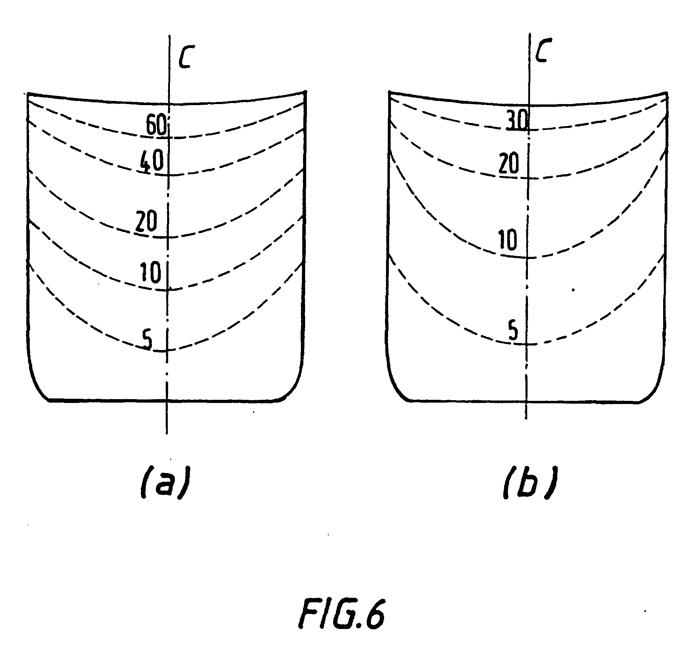

Le Tableau I regroupe les dimensions principales des fours utilisés, les paramètres de croissance des blooms et valeurs moyennes de taux de purification obtenus sur environ 5 à 15 essais par courbe de montée et par type de four. Tous ces essais ont été faits avec un cycle de tassage comportant un temps d'émersion de la tige de 23 secondes et un temps d'immersion (position de cristallisation et de tassage) de 15 secondes.
Ces essais mettent en évidence le fait que les blooms obtenus avec une vitesse de montée sensiblement constante présentent une hétérogénéité interne et une variation d'un bloom à l'autre nettement plus importantes que les blooms obtenus selon l'invention. On observe également que la pureté moyenne du bloom est d'autant plus faible que le diamètre du creuset est grand, ce que la demanderesse explique notamment par le fait que la partie périphérique du bloom, où se trouve le niveau de pureté le plus élevé, varie inversement avec le diamètre du bloom, et donc avec le diamètre du creuset.
Ces essais montrent aussi que la production de cristaux à la fois sur la tige (typiquement environ 40 % dans ces essais) du moyen de tassage et sur la paroi interne du creuset (environ 60 %) permet d'augmenter considérablement le taux production des cristaux de cristallisation partielle sans nécessiter pour autant des capacités de refroidissement rédhibitoires en termes de coûts de production ou d'investissements. Ceci pourrait éventuellement s'expliquer par une accumulation rapide au fond du creuset liée à l'espace entre l'embout et la paroi du creuset, ainsi que par l'utilisation d'une tige servant également à la cristallisation, de sorte que cette étape n'est plus limitante, et un effet de lavage des cristaux durant leur chute à contre courant d'un courant ascendant d'aluminium liquide chaud.
La demanderesse a tenté de comprendre l'origine de l'amélioration surprenante de la pureté moyenne des blooms, qui est obtenue en utilisant des courbes de montée de cristaux très convexes (c'est-à-dire à vitesse de montée très décroissante au fur et à mesure que la hauteur déjà tassée augmente). Dans ce but, un tranche diamétrale ("coupe" axiale des blooms) a été prélevée sur un bloom élaboré selon l'exemple 3 et sur un bloom élaboré selon l'exemple 7. Une analyse par spectrométrie d'étincelles de la teneur en silicium et en fer a été effectuée sur une série d'échantillons prélevés sur toute la surface de ces tranches. Cette analyse a permis de réaliser une cartographie des teneurs en fer et en silicium du métal, en fonction de la position des échantillons dans chaque tranche axiale du bloom. La figure 6 montre les résultats obtenus, dans le cas des teneurs en silicium, sous forme de "courbes d'iso-niveaux" ("isoteneurs") en silicium. Ces courbes montrent que, dans les blooms élaborés selon l'exemple 3 (figure 6a), la teneur en silicium croît fortement avec la hauteur tassée à partir du fond du creuset et que cette croissance de la teneur en silicium avec la hauteur est beaucoup plus faible dans le cas du bloom élaboré selon l'exemple 7 (figure 6b). Dans ce dernier cas, en outre, on constate une meilleure purification de la couronne extérieure du bloom par rapport au premier cas, en particulier dans la partie "haute" du bloom.

On note également que, pour le bloom élaboré selon l'exemple 7, il suffit d'un sciage très modéré de la "tête" pour éliminer la plus grande partie de la zone du bloom la moins purifiée (pour laquelle les teneurs en silicium sont supérieures à 25 à 30 ppm). Un sciage de la tête de bloom solide de l'ordre de 5 à 8 % permet alors d'atteindre des puretés moyennes très élevées sur le métal solide restant après sciage.

Dans le cas des blooms élaborés selon l'exemple 3, en revanche, on constate que la zone de moins bonne pureté est beaucoup plus étendue et l'on comprend qu'un sciage, même éventuellement plus important (qui dégrade donc sensiblement la productivité, c'est-à-dire le poids net final du bloom scié pour une durée d'opération identique), ne parvient qu'à améliorer de façon marginale la pureté moyenne du métal restant après sciage.

Ces résultats montrent que l'homogénéité de composition des blooms obtenus est donc bien meilleure, et cette composition est en moyenne beaucoup plus pure, pour des courbes de montée, très convexes, du type c).

## Série d'essais 2

Afin d'évaluer l'influence de la meilleure homogénéité des composition interne des blooms individuels obtenus en adoptant les courbes de montée convexes de type c), la demanderesse a, dans le cadre d'un contrôle de production, réalisé des analyses sur 90 blooms obtenus à partir d'un métal primaire de titre sensiblement constant (à savoir une teneur en fer comprise entre 280 et 320 ppm, inclusivement, et une teneur en silicium comprise entre 180 et 220 ppm, inclusivement). Les 90 opérations de ségrégation correspondantes ont été réalisées en gros creusets d'une capacité de 2000 kg d'aluminium liquide, avec une durée de montée des blooms de 18 heures après accrochage. Sur ces 90 opérations, 45 ont été réalisées avec des courbes de montée linéaires de type a) et 45 ont été réalisées avec des courbes de montée convexes de type c). Après la fin du tassage, l'impur liquide a été éliminé et tous les blooms ont été égouttés pendant une durée minimale de 40 minutes ; leur tête pâteuse riche en liquide résiduel impur a également été grattée, au-delà de l'égouttage, à l'aide d'une hélice en graphite, afin d'éliminer cette zone plus impure, sur environ 8 cm de profondeur (plus précisément entre 5 et 10 cm en valeurs extrêmes). Après grattage et égouttage, et refroidissement, les blooms solides froids ont été extraits de leur creuset et pesés dans cet état brut. Leur poids s'étageait entre 1370 kg et 1460 kg, avec un poids moyen de 1405 kg (les deux populations de blooms, c'est-à-dire résultant d'une montée de type a) et ceux résultant d'une montée de type c), ne distinguaient pas de ce point de vue). Tous les blooms ont ensuite été sciés en tête, en visant une longueur constante de bloom scié résiduel, correspondant à un poids net de 1300 kg ± 10 kg du bloom résiduel après sciage. Les 45 blooms de type a) et les 45 blooms de type c) ont alors été refondus séparément, par groupes de 3 blooms (donc 15 opérations de refusion des blooms de type a) et 15 opérations de refusion des blooms de type c)), dans un four de capacité de 4 tonnes, chauffé par tubes radiants, et à garnissage d'alumine très pure. Il avait préalablement été vérifié que ce four polluait très peu le métal pendant ces refusions (reprise de fer inférieure à 0,3 ppm et reprise de silicium inférieure à 1,0 ppm). Après chaque opération de refusion, des échantillons de métal refondu ont été prélevés et leurs teneurs en fer et silicium ont été analysées. Ces analyses ont montré que :

- Pour les 15 refusions de 3 blooms de type a), la teneur moyenne en fer du métal refondu était de 8,3 ppm, avec des valeurs allant de 3,4 ppm à 14,7 ppm (donc une différence entre les valeurs extrêmes de 11,3 ppm), et la teneur en silicium du métal refondu était de 28 ppm, avec des valeurs allant de 15 ppm à 51 ppm (donc une différence entre les valeurs extrêmes de 36 ppm) ;
- Pour les 15 refusions de 3 blooms de type c), la teneur moyenne en fer du métal refondu était de 3,0 ppm, avec des valeurs allant de 1,4 ppm à 5,2 ppm (donc une différence entre les valeurs extrêmes de 3, 8 ppm), et la teneur moyenne en silicium du métal refondu a été de 12 ppm, avec valeurs allant de 6,4 ppm à 18 ppm (donc une différence entre les valeurs extrêmes de 11,6 ppm).

Ces contrôles montrent donc que les courbes de montée très convexes de type c) conduisent non seulement à des puretés moyennes plus grandes du métal ségrégé, par rapport à des courbes de montée linéaires de type a), mais conduisent également à des dispersions de pureté beaucoup plus faibles, c'est-à-dire à une moins grande variabilité. Cet amélioration est importante, car, en production industrielle, les blooms ségrégés ne peuvent être analysés avant leur refusion ; pour des raisons de coût, ils sont refondus par lots aussi importants que possible. Une forte dispersion de pureté de bloom à bloom induit alors des risques accrus qu'une coulée complète puisse être rebutée, pour cause de non-respect de la pureté exigée, si un ou plusieurs blooms dépassent largement les limites de teneurs en impuretés visées. D'une manière générale, pour limiter ces risques en production industrielle, on vise une teneur moyenne en impuretés pour les blooms qui est de l'ordre de la teneur maximale admise, moins deux fois la dispersion des teneurs de bloom à bloom. Dans ces conditions, une forte dispersion conduit à augmenter les coûts de purification, en obligeant à rechercher une pureté moyenne beaucoup plus grande.

Série d'essais 3

Des essais industriels d'ultra-purification d'aluminium 99,99 % en aluminium d'une pureté minimale de 99,9995 % ont aussi été effectués selon l'invention, en utilisant des courbes de montée très convexes de type c) et en utilisant des creuset en graphite ultra-pur, afin de limiter les risques de pollution du métal par les impuretés des réfractaires constituant les creusets usuels. Ce creuset en graphite, d'un diamètre intérieur moyen de 600 mm et d'une hauteur de 2000 mm, et protégé intérieurement par un poteyage à base d'alumine très pure liée par un gel d'alumine précuit à 700°C, a été chargé avec 1310 kg d'aluminium électroraffiné dont la composition était : Fe = 2 ppm, Si = 3 ppm, Cu = 2 ppm, Th = 0,12 ppm, U = 0,02 ppm, Ti + V + Zr = 0,5 ppm. Après accrochage, la montée des cristaux a été effectuée en 20 heures, avec une courbe de type c), en visant un poids final du bloom tassé (avant grattage et égouttage) de 880 kg. Après la fin de l'opération, le liquide impur résiduel a été vidangé par basculement, la tête du bloom a été grattée par une hélice en graphite sur une profondeur de 100 mm, et l'égouttage en position basculée a été prolongé pendant une heure. On a ensuite laissé refroidir le bloom égoutté et on l'a extrait du creuset (son poids brut était alors de 780 kg). Le bloom brut a alors été scié à la fois en pied (élimination de 35 kg) et en tête (élimination d'une "rondelle" de 80 kg), puis une couche périphérique d'environ 1 cm d'épaisseur a été enlevée par tournage afin d'éliminer toute trace de poteyage qui aurait pu contaminer la masse solidifiée. Après ces opérations, le poids net du bloom scié en tête et en pied, et tourné, représentait 630 kg. Ce bloom a enfin été refondu dans un four à creuset en graphite ultra pur et le métal ainsi refondu a été analysé par spectrométrie de masse à décharge luminescente. Les teneurs en impuretés ainsi analysées étaient de : Fe < 0,2 ppm, Si = 0,25 ppm, Cu = 0,3 ppm, Ti + V + Cr + Zr < 0,3 ppm total, U ≤ 0,05 ppb et Th ≤ 0,05 ppb (limite analytique).

Cet essai montre que la teneur en impuretés péritectiques du métal refondu s'est révélée inférieure à celle du métal électroraffiné de départ, alors qu'il est normalement admis que les éléments péritectiques se concentrent préférentiellement dans la partie solidifiée du métal. Une analyse du bloc de 35 kg scié en pied du bloom a révélé une forte teneur en éléments péritectiques. La demanderesse attribue donc le résultat observé à des mécanismes de purification qui, contrairement aux idées acquise, favorisent la concentration des éléments péritectiques en pied de bloom, qu'un sciage modéré permet d'éliminer. Ce phénomène a aussi été observé dans des blooms de métal 4N obtenus à partir de métal primaire de titre 99,6 % à 99,93 %.

L'essai a aussi montré que les coefficients de purification des impuretés radioactives U + Th observées sont considérablement améliorées (rapport teneur initiale du métal à raffiner / teneur finale du bloom scié et écroûté supérieur à 2400 dans le cas du thorium), bien au-delà des coefficients d'équilibre solide/liquide (de l'ordre de 100 à 200 dans les cas du thorium et de l'uranium), et ceci en conservant un rendement "métal purifié final / métal initial" très apprécialbe (630 kg / 1310 kg = 48 %).

Le gain apporté par des courbes de montée convexes de type c) aux coefficients de purification observés est donc confirmé dans le cas de l'ultra-purification de métal déjà raffiné, et permet de diminuer très sensiblement les coûts de production du métal ultra-pur pour applications électroniques. L'essai a également montré que, dans les cas où on cherche à réduire la teneur en certains éléments péritectiques, il est avantageux de prévoir une opération de sciage du pied du bloom obtenu selon l'invention.

| | TABLEAU I | | | | | Pureté | | | |
|---|---|---|---|---|---|---|---|---|---|
| | | | | | | Bloom brut | | Bloom scié | |
| Exemple | Hauteur du Creuset (mm) | Diamètre du Creuset (mm) | Poids du bloom brut (kg) | Poids du bloom scié (kg) | Durée de la montée (h) | Type de montée | KFe | KSi | KFe | KSi |
| 1 | 1650 | 650 | 670 | 630 | 12 | a) | 30 | 7 | 35 | 8 |
| 2 | 2050 | 800 | 1400 | 1300 | 12 | a) | 20 | 5 | 25 | 6 |
| 3 | 2050 | 800 | 1400 | 1300 | 16 | a) | 25 | 6 | 30 | 7 |
| 4 | 1650 | 650 | 670 | 630 | 12 | b) | 40 | 9 | 50 | 11 |
| 5 | 2050 | 800 | 1400 | 1300 | 16 | b) | 30 | 7 | 40 | 9 |
| 6 | 2050 | 800 | 1450 | 1300 | 12 | c) | 45 | 9 | 60 | 12 |
| 7 | 2050 | 800 | 1400 | 1300 | 16 | c) | 60 | 11 | 90 | 16 |
| 8 | 2050 | 800 | 1450 | 1300 | 20 | c) | 100 | 15 | 180 | 22 |
| 9 | 2050 | 800 | 1400 | 1260 | 20 | c) | 120 | 16 | 200 | 25 |

**Avantages de l'invention**

Le procédé selon l'invention permet de maîtriser le temps nécessaire pour former des blooms de masse donnée, ce qui conduit à une meilleure gestion de la production et des postes de travail.

Le procédé et le dispositif selon l'invention sont susceptibles d'automatisation, au moins partielle, et d'informatisation. Ils permettent par ailleurs soit d'obtenir une pureté du métal ségrégé plus grande, à productivité constante, soit d'améliorer sensiblement la productivité, à pureté constante.

**Revendications**

1. Procédé de purification de l'aluminium par ségrégation visant à la formation par croissance d'une masse solide, appelée "bloom", de très haute pureté à partir d'une masse d'aluminium liquide, appelée liqueur mère, ledit procédé étant effectué dans un dispositif comprenant un creuset réfractaire, des moyens de chauffage dudit creuset, au moins un moyen de tassage, des moyens de déplacement vertical du ou de chaque moyen de tassage, et des moyens de détachement, ledit procédé comprenant une opération de croissance dans ledit creuset dudit bloom au fond dudit creuset, ladite opération de croissance comprenant :

   - la formation de cristaux d'aluminium par cristallisation sur au moins une surface spécifique dudit dispositif, dite zone de cristallisation, dont la température est inférieure à la température du liquidus de ladite liqueur mère,
   - le détachement desdits cristaux à l'aide desdits moyens de détachement,
   - la migration desdits cristaux vers le fond dudit creuset sous l'effet de la force de la gravité,
   - l'accumulation desdits cristaux sur la surface supérieure de ladite masse solide,
   - le tassage desdits cristaux accumulés et de ladite masse solide à l'aide du ou de chaque dit moyen de tassage,
   - une refusion partielle de ladite masse solide au cours de la croissance, à l'aide desdits moyens de chauffage,

   ledit procédé étant **caractérisé en ce qu'**il comprend :

   - la mesure de la hauteur H dudit bloom au cours de ladite opération de croissance,
   - l'ajustement de la puissance de chauffe P en fonction de la hauteur H mesurée de manière à obtenir une vitesse de progression de la hauteur qui est décroissante dans le temps.

2. Procédé de purification selon la revendication 1, **caractérisé en ce que** ledit ajustement est fonction de l'écart entre la hauteur mesurée H et une valeur de consigne Ho, c'est-à-dire fonction de H - Ho, Ho étant une valeur de consigne prédéterminée et variable dans le temps.

3. Procédé de purification selon la revendication 1 ou 2, **caractérisé en ce que** ladite hauteur H est mesurée à l'aide dudit moyen de tassage.

4. Procédé de purification selon l'une des revendications 1 à 3, **caractérisé en ce qu'**il comprend, à la fin de l'opération de croissance, une opération de séparation physique de la liqueur mère résiduelle et du bloom final.

5. Procédé de purification selon la revendication 4, **caractérisé en ce que** ladite opération de séparation est effectuée lorsque le bloom a atteint une hauteur Hf prédéterminée.

6. Procédé de purification selon l'une quelconque des revendications 1 à 5, **caractérisé en ce que** lesdits cristaux sont formés à la fois sur la paroi interne du creuset et sur une partie du ou de chaque moyen de tassage.

7. Procédé de purification selon la revendication 6, **caractérisé en ce que**, pour la formation de cristaux sur le ou chaque dit moyen de tassage, une partie du ou de chaque moyen de tassage est alternativement immergée et émergée, de manière à entraîner le refroidissement d'une partie spécifique du ou de chaque moyen de tassage, dite zone de cristallisation, jusqu'à une température inférieure à la température du liquidus de la liqueur mère lors de l'émersion et la formation de cristaux dans ladite zone lors de l'immersion.

8. Procédé de purification selon la revendication 7, **caractérisé en ce que** le temps d'émersion Te de ladite partie dudit moyen de tassage est supérieur au temps d'immersion Ti de ladite partie.

9. Procédé de purification selon la revendication 7 ou 8, **caractérisé en ce que** ledit tassage comprend la mise sous pression de la masse solide à l'aide du ou de chaque moyen de tassage et le maintien de la pression pendant une période de temps sensiblement égale au temps d'immersion Ti.

10. Procédé de purification selon l'une des revendications 7 à 9, caractérisé en ce ledit détachement des cristaux sur le creuset et le ou chaque moyen de tassage est effectué lorsque le ou chaque moyen de tassage est émergé.

11. Procédé de purification selon l'une des revendications 7 à 9, caractérisé en ce ledit détachement des cristaux sur le ou chaque moyen de tassage est effectué lorsque le ou chaque moyen de tassage est en cours d'émersion.

12. Procédé de purification selon l'une des revendications 7 à 11, **caractérisé en ce que** la migration des cristaux vers le fond du creuset se produit durant ladite période d'émersion Te du ou de chaque moyen de tassage.

13. Procédé de purification selon l'une des revendications 7 à 12, caractérisé en ce les dimensions du ou de chaque moyen de tassage et du creuset sont telles que, lorsque le moyen de tassage est immergé, la surface libre de l'aluminium liquide monte de manière à couvrir sensiblement toute la surface de la zone de cristallisation sur la paroi interne du creuset, et telles que, lorsque le ou chaque moyen de tassage est émergé, la surface libre de l'aluminium liquide descend de manière à ce que la partie supérieure de la couronne de cristaux formée dans ladite zone émerge, au moins partiellement, du métal liquide et à ce que les cristaux puissent être détachés sans que les moyens de détachement ne pénètrent dans le métal liquide.

14. Procédé selon l'une des revendications 1 à 13, **caractérisé en ce qu'**il comprend une opération de sciage du pied et/ou de la tête du bloom brut.

15. Dispositif de purification de l'aluminium par ségrégation, apte à former par croissance une masse d'aluminium solide, appelée "bloom", de très haute pureté, à partir d'une masse d'aluminium liquide appelée liqueur mère, ledit dispositif comprenant un creuset réfractaire, un four muni de moyens de chauffage du creuset, des moyens pour former des cristaux par cristallisation partielle sur des surfaces spécifiques, dites zones de cristallisation, des moyens pour détacher lesdits cristaux, au moins un moyen de tassage pour tasser lesdits cristaux et ledit bloom, des moyens pour déplacer verticalement le ou chaque moyen de tassage, et des moyens pour produire une refusion dudit bloom par chauffage en cours de croissance, et étant **caractérisé en ce qu'**il comprend des moyens pour mesurer la hauteur H de ladite masse solide, pour comparer la hauteur H mesurée à une hauteur de consigne Ho prédéterminée et variable dans le temps et pour piloter la puissance de chauffe desdits moyens de chauffage en fonction de la différence entre ladite hauteur H mesurée et la hauteur de consigne Ho de manière à obtenir une vitesse de progression de la hauteur qui est décroissante dans le temps.

16. Dispositif selon la revendication 15, **caractérisé en ce que** le ou chaque moyen de tassage (12) comprend une tige (9) et un embout (10) de tassage solidaire de ladite tige, **en ce qu'**il comprend des moyens pour former des cristaux par cristallisation partielle à la fois sur la tige (9) et sur la paroi interne (26) dudit creuset, dans des zones (29, 29a) dites de cristallisation, **en ce qu'**il comprend des moyens (13, 14) pour détacher lesdits cristaux de ladite tige et de ladite paroi interne, et **en ce qu'**il existe un espace libre (28) entre l'embout (10) et la paroi interne (26) dudit creuset suffisant pour permettre le passage des cristaux détachés par lesdits moyens de détachement lors de leur migration vers le bas du creuset sous l'action de la gravité.

17. Dispositif selon l'une des revendications 15 ou 16, **caractérisé en ce qu'**il possède un unique moyen de tassage.

18. Dispositif selon la revendication 17, **caractérisé en ce qu'**il comprend des moyens pour mesurer la hauteur H de la masse tassée à l'aide du moyen de tassage.

19. Dispositif selon l'une des revendications 16 à 18, **caractérisé en ce que** lesdits moyens pour former des cristaux comprennent un abaissement de la température de ladite paroi interne par effet de drain thermique, de manière à entraîner la formation de cristaux dans une zone de cristallisation sur ladite paroi interne.

20. Dispositif selon l'une des revendications 16 à 19, **caractérisé en ce que** lesdits moyens pour former des cristaux comprennent un refroidissement de ladite tige par rayonnement et/ou convection lorsqu'elle est émergée, de manière à entraîner la formation de cristaux dans la zone de cristallisation sur ladite tige lorsqu'elle est immergée.

21. Dispositif selon l'une des revendications 16 à 20, **caractérisé en ce que** ledit espace libre (28) entre l'embout et ladite paroi interne du creuset est établi par une distance entre la périphérie l'embout et la paroi qui est sensiblement uniforme et supérieure ou égale à 30 mm, et de préférence comprise entre 50 et 100 mm.

**22.** Dispositif selon l'une des revendications 16 à 21, **caractérisé en ce que** la tige (9) et l'embout (10) sont, en tout ou partie, en graphite.

**23.** Dispositif selon l'une des revendications 16 à 22, **caractérisé en ce que** la tige (9) est protégé contre l'oxydation et/ou contre l'abrasion.

**24.** Dispositif selon l'une des revendications 16 à 22, **caractérisé en ce que** la tige est constituée, en tout ou partie, de graphite traité contre l'oxydation à l'air par imprégnation d'un composé tel que le phosphate d'aluminium ou de zinc, l'acide phosphorique ou un mélange de ceux-ci, ou l'acide borique.

**25.** Dispositif selon l'une des revendications 16 à 22, **caractérisé en ce que** la zone superficielle de la tige est imprégnée par un composé anti-abrasion tel que le SiC.

**26.** Dispositif selon l'une des revendications 16 à 22, **caractérisé en ce que** la tige est munie d'un revêtement ou gainage en céramique permettant d'éviter l'oxydation et l'abrasion de celle-ci, tel qu'un gainage en carbure de silicium ou en oxynitrure de silicium et d'aluminium.

**27.** Dispositif selon l'une des revendications 16 à 26, **caractérisé en ce que** la partie supérieure (27) de l'embout (10) est de forme tronconique.

**28.** Dispositif selon l'une des revendications 16 à 27, **caractérisé en ce que** l'embout (10) est muni de moyen de canaux (11) entre la surface inférieure, dite surface de damage, (15) et la surface supérieure (27) dudit embout.

**29.** Dispositif selon l'une des revendications 16 à 28, **caractérisé en ce que** l'embout (10) et la tige (9) forment deux pièces distinctes, quoique solidaires, et **en ce que** la conductivité thermique du joint entre ces deux pièces est faible, c'est-à-dire au moins 10 fois plus faible que celle de ladite tige, de manière à établir une coupure thermique au moins partielle entre la tige et l'embout.

**30.** Dispositif selon l'une des revendications 16 à 29, **caractérisé en ce que** les dimensions du ou de chaque moyen de tassage et du creuset sont telles que, lorsque le ou chaque moyen de tassage est en position basse, la surface libre de l'aluminium liquide monte de manière à couvrir sensiblement toute la surface de la zone de cristallisation sur la paroi interne du creuset, et telles que, lorsque le ou chaque moyen de tassage est mis en position haute, la surface libre de l'aluminium liquide descend de manière à ce que la partie supérieure de la couronne de cristaux formée dans ladite zone émerge, au moins partiellement, du métal liquide et à ce que lesdits cristaux puissent être détachés sans que les moyens de détachement ne pénètrent dans le métal liquide.

**31.** Dispositif selon l'une des revendications 16 à 30, **caractérisé en ce qu'**il comprend des moyens pour que l'opération de détachement des cristaux soit effectuée, sur la tige, lorsque le ou chaque moyen de tassage est en cours de remontée et, sur la surface du creuset, lorsque le ou chaque moyen de tassage est en position haute.

**32.** Dispositif selon l'une des revendications 16 à 31, **caractérisé en ce que** le creuset (2) possède une symétrie cylindrique autour d'un axe C, dit de rotation, **en ce que** ledit dispositif comprend des moyens (17) pour faire tourner le creuset autour de l'axe de rotation C, et **en ce que** le raclage de toute la périphérie de la zone de cristallisation (29) sur le creuset est obtenue par l'action combinée des mouvements de va-et-vient verticaux du moyen de détachement (14) et de rotation dudit creuset.

**33.** Dispositif selon l'une des revendications 16 à 32, **caractérisé en ce que** le creuset (2) est inséré dans une virole en acier (3) munie d'une collerette (30) et la virole (3) repose sur des rouleaux tronconiques inclinés (18) par l'intermédiaire d'une platine (16) supportant l'ensemble creuset/virole.

**34.** Dispositif selon l'une des revendications 15 à 33, **caractérisé en ce qu'**un écran thermique est interposé entre le creuset et les moyens de chauffage de la partie supérieure du four.

**35.** Utilisation du procédé selon l'une revendications 1 à 14 pour l'ultra-purification d'aluminium de pureté au moins égale à 99,97 % en aluminium d'une pureté minimale de 99,998 %.

**36.** Utilisation du dispositif selon l'une revendications 15 à 34 pour l'ultra-purification d'aluminium de pureté au moins égale à 99,97 % en aluminium d'une pureté minimale de 99,998 %.

**Claims**

**1.** Process for purification of aluminum by segregation designed to obtain a very pure solid mass called the "bloom" starting from a liquid aluminum mass called the parent liquor, the said process being carried out in a device comprising a refractory crucible, means of heating the said crucible, at least one means of compaction, means of displacing the (each) said compaction means vertically, and detachment means, the said process comprising an operation in which the said bloom is grown in the said crucible at the bottom of the said crucible, the said growth operation comprising :

- the formation of aluminum crystals by crystallization over at least one specific surface of the said device, called the crystallization zone, in which the temperature is less than the liquidus temperature of the said parent liquor,
- detachment of the said crystals using the said detachment means,
- migration of the said crystals towards the bottom of the said crucible under the effect of gravity,
- accumulation of the said crystals at the top surface of the said solid mass,
- compaction of the said accumulated crystals and the said solid mass, by means of the (each) said compaction means,
- partial remelting of the said solid mass during growth, using the said heating means,

the said process being **characterized in that** it comprises :

- a measurement of the height H of the said bloom during the said growth operation,
- adjustment of the heating power P as a function of the measured height H so as to obtain a variation in the rate of change of the height which decreases with time.

**2.** Purification process according to claim 1, **characterized in that** the said adjustment depends on the difference between the measured height H and a set value Ho, that is as a function of H - Ho, where Ho is a predetermined set value variable with time.

**3.** Purification process according to claim 1 or 2, **characterized in that** the said height H is measured using the said compaction means.

**4.** Purification process according to one of claims 1 to 3, **characterized in that**, at the end of the growth operation, it comprises an operation to physically separate the residual parent liquid and the final bloom.

**5.** Purification process according to claim 4, **characterized in that** the said separation operation is carried out when the bloom has reached a predetermined height Hf.

**6.** Purification process according to one of claims 1 to 5, **characterized in that** the said crystals are formed on the internal wall of the crucible and on part of the (each) compaction means.

**7.** Purification process according to claim 6, **characterized in that**, in order to enable the formation of crystals on the (each) compaction means, part of the (each) compaction means is alternatively immersed and emersed so that a specific part of the (each) said compaction means, called the crystallization zone, is cooled down to a temperature below the liquidus temperature of the parent liquor during withdrawal and crystals are formed in the said zone during immersion.

**8.** Purification process according to claim 7, **characterized in that** the emersion time Te of the said part of the said compaction means is greater than the immersion time Ti of the said part.

**9.** Purification process according to claim 7 or 8, **characterized in that** the said compaction comprises pressurization of the solid mass using the (each) compaction means and maintaining the pressure during a time period approximately equal to the immersion time Ti.

**10.** Purification process according to one of claims 7 to 9, **characterized in that** the said detachment of crystals on the crucible and the (each) said compaction means is done when the (each) compaction means is emersed.

11. Purification process according to any one of claims 7 to 9, **characterized in that** the said detachment of crystals on the (each) said compaction means is achieved when the (each) said compaction means is being emersed.

12. Purification process according to one of claims 7 to 11, **characterized in that** migration of crystals towards the bottom of the crucible takes place during the said period Te during which the (each) compaction means is emersed.

13. Purification process according to one of claims 7 to 12, **characterized in that** the dimensions of the (each) compaction means and the crucible are such that when the compaction means is immersed, the free surface of the liquid aluminum rises to cover practically the entire surface of the crystallization area on the internal wall of the crucible, and such that when the (each) compaction means is emersed, the free surface of the liquid aluminum drops such that the upper part of the ring of crystals formed in the said zone at least partially emerges from the liquid metal and **in that** the crystals can be detached without the detachment means penetrating into the liquid metal.

14. Process according to any one of claims 1 to 13, **characterized in that** it comprises an operation to saw off the top and/or bottom of the rough bloom.

15. Aluminum purification device by segregation, capable of forming a mass of very high purity solid aluminum called a "bloom", from a mass of liquid aluminum called the parent liquor, the said device comprising a refractory crucible, a furnace equipped with crucible heating means, means of forming crystals by partial crystallization on specific zones called crystallization zones, means of detaching the said crystals, at least one compaction means to compact the said crystals and the said bloom, means of moving the (each) compaction means vertically, and means of remelting the said bloom by heating during growth, and being **characterized in that** it comprises means of measuring the height H of the said solid mass, of comparing the measured height H to a predetermined set height Ho that is variable with time and of regulating the heating power of the said heating means as a function of the difference between the said measured height H and the set height Ho so as to obtain a variation in the rate of change of the height which decreases with time.

16. Device according to claim 15, **characterized in that** the (each) compaction means (12) comprises a shaft (9) and a compaction end piece (10) rigidly fixed to the said rod, **in that** it comprises means of forming crystals by partial crystallization both on the shaft (9) and on the internal wall (26) of the said crucible in "crystallization" zones (29, 29a), and **in that** it comprises means (13, 14) of detaching the said crystals from the said shaft and the said internal wall, and **in that** there is a free space (28) between the end piece (10) and the internal wall (26) of the said crucible which is sufficient to enable the passage of crystals detached by the said detachment means during their migration towards the bottom of the crucible under the effect of gravity.

17. Device according to one of claims 15 or 16, **characterized in that** it has a single compaction means.

18. Device according to claim 17, **characterized in that** it comprises means of measuring the height H of the mass compacted using the compaction means.

19. Device according to one of claims 16 to 18, **characterized in that** the said means of forming crystals comprise a drop in a temperature of the said internal wall due to a heat sink effect, so as to induce the formation of crystals in a crystallization zone on the said internal wall.

20. Device according to one of claims 16 to 19, **characterized in that** the said means of forming crystals comprise cooling of the said shaft by radiation and/or convection when it is emersed, so as to induce the formation of crystals on the said shaft in the crystallization zone when it is immersed.

21. Device according to one of claims 16 to 20, **characterized in that** said free space (28) between the end piece and the said internal wall of the crucible is created by a distance between the periphery of the end piece and the wall which is approximately uniform and equal to or greater than 30 mm, and preferably between 50 and 100 mm.

22. Device according to one of claims 16 to 21, **characterized in that** the shaft (9) and the end piece (10) are entirely or partly made of graphite.

23. Device according to one of claims 16 to 22, **characterized in that** the shaft (9) is protected against oxidation and/ or abrasion.

24. Device according to one of claims 16 to 22, **characterized in that** the shaft is entirely or partly made of graphite treated against oxidation in air by impregnation of a compound such as aluminum or zinc phosphate, phosphoric acid or a mixture of these products, or boric acid.

25. Device according to one of claims 16 to 22, **characterized in that** the surface of the shaft is impregnated by an anti-abrasion compound such as SiC.

26. Device according to one of claims 16 to 22, **characterized in that** a ceramic coating or sheathing such as silicon carbide or silicon aluminum oxinitride sheath is applied to the shaft to prevent oxidation and abrasion of the rod.

27. Device according to one of claims 16 to 26, **characterized in that** the upper part (27) of the end piece (10) is in the shape of a truncated cone.

28. Device according to one of claims 16 to 27, **characterized in that** ducts (11) are formed in the end piece (10) between the lower surface called the tamping surface (15), and the upper surface (27) of the said end piece.

29. Device according to one of claims 16 to 28, **characterized in that** the end piece (10) and the shaft (9) form two distinct but attached parts, and **in that** the thermal conductivity of the joint between these two parts is low, in other words at least 10 times lower than the thermal conductivity of the said rod, to setup at least a partial thermal break between the shaft and the end piece.

30. Device according to one of claims 16 to 29, **characterized in that** the dimensions of the (each) said compaction means and the crucible are such that when the (each) compaction means is in the low position, the free surface of the liquid aluminum rises to cover practically the entire crystallization area on the internal surface of the crucible, and when the (each) compaction means is in the high position, the free surface of the liquid aluminum drops so that the upper part of the crystal ring formed in the said area at least partially emerges from the metal, and **in that** the said crystals can be detached without the detachment means entering the liquid metal.

31. Device according to one of claims 16 to 30, **characterized in that** it comprises means such that the crystal detachment operation is carried out on the shaft when the (each) compaction means is rising, and on the surface of the crucible when the (each) compaction means is in the high position.

32. Device according to one of claims 16 to 31, **characterized in that** the crucible (2) has a cylindrical symmetry about an axis C, called the axis of rotation, **in that** the said device comprises means (17) of rotating the crucible about the axis of rotation C, and **in that** the periphery of the crystallization zone (29) on the crucible is scraped by the combined action of vertical up and down movements of the detachment means (14) and rotation of the said crucible.

33. Device according to one of claims 16 to 32, **characterized in that** the crucible (2) is inserted in a steel container (3) fitted with a collar (30) and the container (3) is supported on inclined tapered rollers (18) through a plate (16) supporting the crucible/container assembly.

34. Device according to one of claims 15 to 33, **characterized in that** a heat shield is inserted between the crucible and the means of heating the upper part of the furnace.

35. Use of the process according to one of claims 1 to 14 for ultra-purification of aluminum with a purity of at least 99.97% to obtain aluminum with a minimum purity of 99.998%.

36. Use of the device according to one of claims 15 to 34 for ultra-purification of aluminum with a purity equal to at least 99.97% to obtain aluminum with a minimum purity of 99.998%.

**Patentansprüche**

1. Verfahren zur Reinigung von Aluminium durch Entmischung, um aus einer flüssigen Aluminiummasse, der sog. Mutterlösung, durch Wachstum eine feste Masse, genannt "Bloom", mit sehr hoher Reinheit zu bilden, wobei das Verfahren in einer Vorrichtung durchgeführt wird, die einen feuerfesten Tiegel, Mittel zum Heizen des Tiegels, mindestens ein Verdichtungsmittel, Mittel zur Vertikalverstellung des bzw. jedes Verdichtungsmittels und Mittel zur Ablösung aufweist, und das Verfahren in dem Tiegel einen Wachstumsvorgang des Blooms am Boden des Tiegels umfasst, welcher Wachstumsvorgang umfasst:

- die Bildung von Aluminiumkristallen durch Kristallisation auf mindestens einer spezifischen Oberfläche der Vorrichtung, der sog. Kristallisationszone, deren Temperatur niedriger ist als die Liquidustemperatur der Mutterlösung,
- die Ablösung der Kristalle mittels der Ablösemittel,
- die Abwanderung der Kristalle zum Boden des Tiegels unter Einwirkung der Schwerkraft,
- die Anhäufung der Kristalle auf der Oberseite der festen Masse,
- die Verdichtung der angehäuften Kristalle und der festen Masse mittels des bzw. jedes Verdichtungsmittels,
- ein partielles Umschmelzen der festen Masse während des Wachstums mittels der Heizmittel,

wobei das Verfahren **dadurch gekennzeichnet ist, dass** es umfasst:

- die Messung der Höhe H des Blooms während des Wachstumsvorgangs,
- die Einstellung der Heizleistung P in Abhängigkeit von der gemessenen Höhe H, um eine Zunahmegeschwindigkeit der Höhe zu erhalten, die mit der Zeit abnimmt.

2. Reinigungsverfahren nach Anspruch 1, **dadurch gekennzeichnet, dass** die Einstellung von der Differenz zwischen der gemessenen Höhe H und einem Sollwert Ho abhängt, d.h. von H - Ho, wobei Ho ein vorbestimmter und zeitlich veränderlicher Sollwert ist.

3. Reinigungsverfahren nach Anspruch 1 oder 2, **dadurch gekennzeichnet, dass** die Höhe H mittels des Verdichtungsmittels gemessen wird.

4. Reinigungsverfahren nach einem der Ansprüche 1 bis 3, **dadurch gekennzeichnet, dass** es am Ende des Wachstumsvorgangs einen Vorgang zur physikalischen Trennung der restlichen Mutterlösung und des Endblooms aufweist.

5. Reinigungsverfahren nach Anspruch 4, **dadurch gekennzeichnet, dass** der Trennungsvorgang dann durchgeführt wird, wenn der Bloom eine vorbestimmte Höhe Hf erreicht hat.

6. Reinigungsverfahren nach einem der Ansprüche 1 bis 5, **dadurch gekennzeichnet, dass** die Kristalle sowohl auf der Innenwand des Tiegels als auch auf einem Teil des bzw. jedes Verdichtungsmittels gebildet werden.

7. Reinigungsverfahren nach Anspruch 6, **dadurch gekennzeichnet, dass** zur Kristallbildung auf dem bzw. jedem Verdichtungsmittel ein Teil des bzw. jedes Verdichtungsmittels abwechselnd eingetaucht und herausgezogen wird, um die Abkühlung eines spezifischen Teils des bzw. jedes Verdichtungsmittels, der sog. Kristallisationszone, bis auf eine Temperatur unterhalb der Liquidustemperatur der Mutterlösung beim Herausziehen und die Kristallbildung in der Zone beim Eintauchen zu bewirken.

8. Reinigungsverfahren nach Anspruch 7, **dadurch gekennzeichnet, dass** die Emersionszeit Te des Teils des Verdichtungsmittels länger ist als die Immersionszeit Ti des Teils.

9. Reinigungsverfahren nach Anspruch 7 oder 8, **dadurch gekennzeichnet, dass** die Verdichtung die Druckbeaufschlagung der festen Masse mittels des bzw. jedes Verdichtungsmittels und das Halten des Druckes während einer Zeitdauer umfasst, die im Wesentlichen der Immersionszeit Ti entspricht.

10. Reinigungsverfahren nach einem der Ansprüche 7 bis 9, **dadurch gekennzeichnet, dass** die Ablösung der Kristalle auf dem Tiegel und dem bzw. jedem Verdichtungsmittel dann durchgeführt wird, wenn das bzw. jedes Verdichtungsmittel herausgezogen ist.

11. Reinigungsverfahren nach einem der Ansprüche 7 bis 9, **dadurch gekennzeichnet, dass** die Ablösung der Kristalle auf dem bzw. jedem Verdichtungsmittel beim Herausziehen des bzw. jedes Verdichtungsmittels durchgeführt wird.

**12.** Reinigungsverfahren nach einem der Ansprüche 7 bis 11, **dadurch gekennzeichnet, dass** die Abwanderung der Kristalle zum Boden des Tiegels während der Emersionszeit Te des bzw. jedes Verdichtungsmittels erfolgt.

**13.** Reinigungsverfahren nach einem der Ansprüche 7 bis 12, **dadurch gekennzeichnet, dass** die Abmessungen des bzw. jedes Verdichtungsmittels und des Tiegels so sind, dass bei eingetauchtem Verdichtungsmittel die freie Oberfläche des flüssigen Aluminiums steigt, um im Wesentlichen die ganze Oberfläche der Kristallisationszone auf der Innenwand des Tiegels zu bedecken, und dass dann, wenn das bzw. jedes Verdichtungsmittel herausgezogen ist, die freie Oberfläche des flüssigen Aluminiums sinkt, so dass der obere Teil der in dieser Zone gebildeten Kristallkrone zumindest teilweise aus dem flüssigen Metall herausragt und die Kristalle abgelöst werden können, ohne dass die Ablösemittel in das flüssige Metall eindringen.

**14.** Verfahren nach einem der Ansprüche 1 bis 13, **dadurch gekennzeichnet, dass** es ein Absägen des unteren und/ oder oberen Endes des Rohblooms umfasst.

**15.** Vorrichtung zur Reinigung von Aluminium durch Entmischung, welche Vorrichtung geeignet ist, aus einer flüssigen Aluminiummasse, der sog. Mutterlösung, durch Wachstum eine feste Aluminiummasse, genannt "Bloom", mit sehr hoher Reinheit zu bilden, wobei die Vorrichtung einen festenfesten Tiegel, einen Ofen mit Mitteln zum Heizen des Tiegels, Mittel zur Bildung von Kristallen durch Teilkristallisation auf spezifischen Oberflächen, den sog. Kristallisationszonen, Mittel zur Ablösung der Kristalle, mindestens ein Verdichtungsmittel zur Verdichtung der Kristalle und des Blooms, Mittel zur Vertikalverstellung des bzw. jedes Verdichtungsmittels und Mittel zum Umschmelzen des Blooms durch Erhitzen während des Wachstums aufweist und **dadurch gekennzeichnet ist, dass** sie Mittel zum Messen der Höhe H der festen Masse aufweist, um die gemessene Höhe H mit einer vorbestimmten und zeitlich veränderlichen Sollhöhe Ho zu vergleichen und um die Heizleistung der Heizmittel in Abhängigkeit von der Differenz zwischen der gemessenen Höhe H und der Sollhöhe Ho zu steuern, so dass sich eine Höhenzunahmegeschwindigkeit ergibt, die mit der Zeit abnimmt.

**16.** Vorrichtung nach Anspruch 15, **dadurch gekennzeichnet, dass** das bzw. jedes Verdichtungsmittel (12) eine Stange (9) und einen mit der Stange verbundenen Kopf (10) zum Verdichten aufweist, dass sie Mittel aufweist, um durch Teilkristallisation Kristalle sowohl auf der Stange (9) als auch auf der Innenwand (26) des Tiegels in sog. Kristallisationszonen (29, 29a) zu bilden, dass sie Mittel (13, 14) aufweist, um die Kristalle von der Stange und der Innenwand abzulösen, und dass ein Freiraum (28) zwischen dem Kopf (10) und der Innenwand (26) des Tiegels vorgesehen ist, der groß genug ist, um die durch die Ablösemittel abgelösten Kristalle bei ihrer Abwanderung zum unteren Teil des Tiegels unter Einwirkung der Schwerkraft durchzulassen.

**17.** Vorrichtung nach einem der Ansprüche 15 oder 16, **dadurch gekennzeichnet, dass** sie ein einziges Verdichtungsmittel besitzt.

**18.** Vorrichtung nach Anspruch 17, **dadurch gekennzeichnet, dass** sie Mittel zum Messen der Höhe H der mit dem Verdichtungsmittel verdichteten Masse aufweist.

**19.** Vorrichtung nach einem der Ansprüche 16 bis 18, **dadurch gekennzeichnet, dass** die Mittel zur Bildung von Kristallen ein Absenken der Temperatur der Innenwand durch Wärmeabführung beinhalten, um die Kristallbildung in einer Kristallisationszone auf der Innenwand zu bewirken.

**20.** Vorrichtung nach einem der Ansprüche 16 bis 19, **dadurch gekennzeichnet, dass** die Mittel zur Bildung von Kristallen eine Strahlungs- und/oder Konvektionskühlung der Stange umfassen, wenn sie herausgezogen ist, um die Kristallbildung in der Kristallisationszone auf der Stange zu bewirken, wenn sie eingetaucht ist.

**21.** Vorrichtung nach einem der Ansprüche 16 bis 20, **dadurch gekennzeichnet, dass** der Freiraum (28) zwischen dem Kopf und der Innenwand des Tiegels durch einen Abstand zwischen der Außenfläche des Kopfes und der Wand festgelegt ist, der im Wesentlichen gleichmäßig und größer oder gleich 30 mm ist und vorzugsweise zwischen 50 und 100 mm liegt.

**22.** Vorrichtung nach einem der Ansprüche 16 bis 21, **dadurch gekennzeichnet, dass** die Stange (9) und der Kopf (10) ganz oder teilweise aus Graphit sind.

**23.** Vorrichtung nach einem der Ansprüche 16 bis 22, **dadurch gekennzeichnet, dass** die Stange (9) gegen Oxidation und/oder Abrasion geschützt ist.

**24.** Vorrichtung nach einem der Ansprüche 16 bis 22, **dadurch gekennzeichnet, dass** die Stange ganz oder teilweise aus behandeltem Graphit besteht, der durch Imprägnierung mit einer Verbindung wie Aluminium- oder Zinkphosphat, Phosphorsäure oder einer Mischung daraus oder Borsäure gegen Luftoxidation geschützt ist.

**25.** Vorrichtung nach einem der Ansprüche 16 bis 22, **dadurch gekennzeichnet, dass** der Oberflächenbereich der Stange mit einer antiabrasiven Verbindung wie SiC imprägniert ist.

**26.** Vorrichtung nach einem der Ansprüche 16 bis 22, **dadurch gekennzeichnet, dass** die Stange mit einer Beschichtung oder Umhüllung aus Keramik zur Vermeidung ihrer Oxidation und Abrasion versehen ist, wie beispielsweise einer Umhüllung aus Siliziumkarbid oder aus Silizium- und Aluminium-Oxinitrid.

**27.** Vorrichtung nach einem der Ansprüche 16 bis 26, **dadurch gekennzeichnet, dass** der obere Teil (27) des Kopfes (10) kegelstumpfförmig ist.

**28.** Vorrichtung nach einem der Ansprüche 16 bis 27, **dadurch gekennzeichnet, dass** der Kopf (10) zwischen der Unterseite (15), der sog. Stampfseite, und der Oberseite (27) des Kopfes mit Kanälen (11) versehen ist.

**29.** Vorrichtung nach einem der Ansprüche 16 bis 28, **dadurch gekennzeichnet, dass** der Kopf (10) und die Stange (9) zwei einzelne, wenn auch miteinander verbundene Teile bilden und dass die Wärmeleitfähigkeit der Verbindungsstelle zwischen diesen beiden Teilen gering ist, d.h. mindestens 10 mal geringer als die der Stange, um zwischen Stange und Kopf eine zumindest partielle Wärmetrennung herzustellen.

**30.** Vorrichtung nach einem der Ansprüche 16 bis 29, **dadurch gekennzeichnet, dass** die Abmessungen des bzw. jedes Verdichtungsmittels und des Tiegels so gewählt sind, dass in gesenkter Position des bzw. jedes Verdichtungsmittels die freie Oberfläche des flüssigen Aluminiums steigt und im Wesentlichen die ganze Oberfläche der Kristallisationszone auf der Innenwand des Tiegels bedeckt und in angehobener Position des bzw. jedes Verdichtungsmittels die freie Oberfläche des flüssigen Aluminiums sinkt, so dass der obere Teil der in dieser Zone gebildeten Kristallkrone zumindest teilweise aus dem flüssigen Metall herausragt und die Kristalle abgelöst werden können, ohne dass die Ablösemittel in das flüssige Metall eindringen.

**31.** Vorrichtung nach einem der Ansprüche 16 bis 30, **dadurch gekennzeichnet, dass** sie Mittel umfasst, damit der Ablösevorgang der Kristalle auf der Stange während des Hochziehens des bzw. jedes Verdichtungsmittels erfolgt und auf der Oberfläche des Tiegels erfolgt, wenn sich das bzw. jedes Verdichtungsmittel in der angehobenen Position befindet.

**32.** Vorrichtung nach einem der Ansprüche 16 bis 31, **dadurch gekennzeichnet, dass** der Tiegel (2) zylindrische Symmetrie um eine Rotationsachse C besitzt, dass die Vorrichtung Mittel (17) aufweist, um den Tiegel um die Rotationsachse C zu drehen und dass das Abschaben der gesamten Außenfläche der Kristallisationszone (29) auf dem Tiegel durch die kombinierte Wirkung der vertikalen Hin- und Herbewegungen des Ablösemittels (14) und der Rotation des Tiegels erfolgt.

**33.** Vorrichtung nach einem der Ansprüche 16 bis 32, **dadurch gekennzeichnet, dass** der Tiegel (2) in einem mit einem Flansch (30) versehenen Stahlmantel (3) eingebettet ist und der Mantel (3) über eine die Tiegel-Mantel-Anordnung abstützende Halteplatte (16) auf geneigten, kegelstumpfförmigen Rollen (18) aufliegt.

**34.** Vorrichtung nach einem der Ansprüche 15 bis 33, **dadurch gekennzeichnet, dass** ein Hitzeschild zwischen dem Tiegel und den Heizmitteln des oberen Ofenbereichs angeordnet ist.

**35.** Verwendung des Verfahrens nach einem der Ansprüche 1 bis 14 für die Ultrareinigung von Aluminium mit einer Reinheit von mindestens 99,97 %, um Aluminium mit einer Mindestreinheit von 99,998 % zu erhalten.

**36.** Verwendung des Vorrichtung nach einem der Ansprüche 15 bis 34 für die Ultrareinigung von Aluminium mit einer Reinheit von mindestens 99,97 %, um Aluminium mit einer Mindestreinheit von 99,998 % zu erhalten.

FIG.1

FIG. 2

FIG.3

FIG.4

FIG.5

FIG.6

FIG.7